# EUROPEAN PATENT APPLICATION

(11) **EP 4 502 796 A1**
(43) Date of publication of application: **05.02.2025**
(21) Application number: 22935896.5
(22) Date of filing: 11.11.2022
(51) Int. Cl.: G06F 9/455, G06F 21/56, G06F 21/53, H04L 9/32, H04L 9/06

(54) **SIGNAL PROCESSING DEVICE AND VEHICLE DISPLAY DEVICE HAVING SAME**

(30) Priority: 31.03.2022 KR 20220040748
(71) Applicant: LG Electronics Inc., Yeongdeungpo-gu Seoul 07336 (KR)
(72) Inventor: YOON, Jaegu, Seoul 06772 (KR); KIM, Eunjin, Seoul 06772 (KR); KIM, Youngtae, Seoul 06772 (KR); JEONG, Daeyoung, Seoul 06772 (KR)
(74) Representative: Vossius & Partner Patentanwälte Rechtsanwälte mbB
(86) International application number: PCT/KR2022/017731
(87) International publication number: WO 2023/191222

(57) **Abstract**

A signal processing device and a vehicle display apparatus including the same are disclosed. The signal processing device according to an embodiment of the present disclosure includes a shared memory; and a processor configured to perform signal processing for at least one display, wherein the processor is configured to execute a server virtual machine and at least one guest virtual machine on a hypervisor in the processor, wherein in response to connection with a second signal processing device on which a second server virtual machine and at least one second guest virtual machine are executed, the server virtual machine is configured to transmit a security key to the second server virtual machine. Accordingly, it is possible to increase security during data transmission between a plurality of signal processing devices in a vehicle.

## Description

### BACKGROUND

### 1. Technical Field

The present disclosure relates to a signal processing device and a vehicle display apparatus including the same, and more particularly to a signal processing device capable of increasing security during data transmission between a plurality of signal processing devices in a vehicle, and a vehicle display apparatus including the signal processing device.

### 2. Description of the Related Art

A vehicle is an apparatus that a driver moves in a desired direction. A typical example of the vehicle is a car.

Meanwhile, a display apparatus for vehicles is mounted in the vehicle for convenience of users who use the vehicle.

For example, a display is disposed in a cluster in order to display various kinds of information. Meanwhile, in order to display vehicle driving information, various displays, such as an audio video navigation (AVN) display, are mounted in the vehicle, in addition to the cluster.

In the case in which the number of displays in the display apparatus for vehicles is increased, however, signal processing for the displays is complicated.

Meanwhile, as a software function becomes an important part of the vehicle display apparatus, the vehicle display apparatus requires a high-performance computing system.

Meanwhile, signal processing in data transmission between the plurality of signal processing devices becomes complicated, such that security during data transmission may be raised as a critical issue.

### SUMMARY

It is an objective of the present disclosure to provide a signal processing device capable of increasing security during data transmission between a plurality of signal processing devices in a vehicle, and a vehicle display apparatus including the signal processing device.

Meanwhile, it is another objective of the present disclosure to provide a signal processing device capable of efficiently performing data transmission between a plurality of signal processing devices in a vehicle, and a vehicle display apparatus including the signal processing device.

Meanwhile, it is yet another objective of the present disclosure to provide a signal processing device capable of classifying levels of security between a plurality of signal processing devices in a vehicle based on the Automotive Safety Integrity Level (ASIL), and a vehicle display apparatus including the signal processing device.

In accordance with an aspect of the present disclosure, the above and other objectives can be accomplished by providing a signal processing device and a vehicle display apparatus including the same, the signal processing device including: a shared memory; and a processor configured to perform signal processing for at least one display, wherein the processor is configured to execute a server virtual machine and at least one guest virtual machine on a hypervisor in the processor, wherein in response to connection with a second signal processing device on which a second server virtual machine and at least one second guest virtual machine are executed, the server virtual machine is configured to transmit a security key to the second server virtual machine.

Meanwhile, the server virtual machine may be configured to transmit a certificate together when transmitting the security key to the second server virtual machine.

Meanwhile, the server virtual machine may be configured to store data to be shared with the second signal processing device to the shared memory.

Meanwhile, the server virtual machine may be configured to selectively encrypt the data to be shared with the second signal processing device based on impacting levels according to a data type and ASIL ratings, and to store the encrypted data to the shared memory.

Meanwhile, the server virtual machine may be configured to: in response to the impacting level being level 1, perform authentication without encrypting data; in response to the impacting level being level 2, perform authentication and encrypt data without updating the security key; and in response to the impacting level being level 3, perform authentication, encrypt data, and update the security key.

Meanwhile, the server virtual machine may be configured to receive a second certificate from the second signal processing device, and a verifier in the hypervisor is configured to verify the second certificate, wherein in response to the second certificate being verified, the server virtual machine may be configured to transmit the security key to the second server virtual machine.

Meanwhile, in response to the second certificate being verified, the server virtual machine may be configured to encrypt a symmetric key, and to transmit a security key, including the encrypted symmetric key, to the second server virtual machine.

Meanwhile, when encrypting the symmetric key, the server virtual machine may be configured to encrypt the symmetric key based on a public key of the second signal processing device.

Meanwhile, the processor may be configured to execute a security executor including a policy manager, wherein the policy manager may be configured to transmit a sharing policy or a topic based on the sharing policy to the server virtual machine, and the server virtual machine may be configured to transmit the sharing policy or the topic based on the sharing policy to the second server virtual machine.

Meanwhile, the processor may be configured to execute a security executor including a policy manager, wherein the server virtual machine may be configured to receive a policy table from the second server virtual machine, and the policy manager may be configured to update the policy table, wherein the server virtual machine may be configured to transmit the updated policy table to the second server virtual machine.

Meanwhile, in response to connection with the second signal processing device, the server virtual machine may be configured to determine whether a second server virtual machine is executed in the second signal processing device, wherein in response to the second server virtual machine being executed, the server virtual machine may be configured to set the signal processing device as a master signal processing device and the second signal processing device as a slave signal processing device based on the ASIL ratings.

Meanwhile, in the case in that in the second signal processing device is connected, the second server virtual machine is not executed in the second signal processing device, and authentication or encryption is not supported, the server virtual machine may be configured to set the signal processing device as a master signal processing device and the second signal processing device as a slave signal processing device.

In accordance with another aspect of the present disclosure, the above and other objectives can be accomplished by providing a signal processing device and a vehicle display apparatus including the same, the signal processing device including: a shared memory; and a processor configured to perform signal processing for at least one display, wherein the processor is configured to execute a server virtual machine and at least one guest virtual machine on a hypervisor in the processor, wherein in response to connection with a cartridge-based second signal processing device, the server virtual machine is configured to transmit a security key to a security interface in the second signal processing device.

Meanwhile, the server virtual machine may be configured to transmit a certificate together when transmitting the security key to the security interface in the second signal processing device.

Meanwhile, the server virtual machine may be configured to store data to be shared with the second signal processing device to the shared memory.

Meanwhile, the server virtual machine may be configured to selectively encrypt the data to be shared with the second signal processing device based on impacting levels according to a data type and ASIL ratings, and to store the encrypted data to the shared memory.

Meanwhile, the server virtual machine may be configured to receive a second certificate from the second signal processing device, and a verifier in the hypervisor is configured to verify the second certificate, wherein in response to the second certificate being verified, the server virtual machine is configured to transmit the security key to a security interface in the second signal processing device.

### EFFECTS OF THE DISCLOSURE

A signal processing device according to an embodiment of the present disclosure includes: a shared memory; and a processor configured to perform signal processing for at least one display, wherein the processor is configured to execute a server virtual machine and at least one guest virtual machine on a hypervisor in the processor, wherein in response to connection with a second signal processing device on which a second server virtual machine and at least one second guest virtual machine are executed, the server virtual machine is configured to transmit a security key to the second server virtual machine. Accordingly, it is possible to increase security during data transmission between a plurality of signal processing devices in a vehicle.

Meanwhile, the server virtual machine may be configured to transmit a certificate together when transmitting the security key to the second server virtual machine. Accordingly, it is possible to increase security during data transmission between a plurality of signal processing devices in a vehicle.

Meanwhile, the server virtual machine may be configured to store data to be shared with the second signal processing device to the shared memory. Accordingly, it is possible to efficiently perform data transmission between a plurality of signal processing devices in a vehicle.

Meanwhile, the server virtual machine may be configured to selectively encrypt the data to be shared with the second signal processing device based on impacting levels according to a data type and ASIL ratings, and to store the encrypted data to the shared memory. Accordingly, levels of security between the plurality of signal processing devices in a vehicle may be classified based on the ASIL.

Meanwhile, the server virtual machine may be configured to: in response to the impacting level being level 1, perform authentication without encrypting data; in response to the impacting level being level 2, perform authentication and encrypt data without updating the security key; and in response to the impacting level being level 3, perform authentication, encrypt data, and update the security key. Accordingly, levels of security between the plurality of signal processing devices in a vehicle may be classified based on the ASIL.

Meanwhile, the server virtual machine may be configured to receive a second certificate from the second signal processing device, and a verifier in the hypervisor is configured to verify the second certificate, wherein in response to the second certificate being verified, the server virtual machine may be configured to transmit the security key to the second server virtual machine. Accordingly, it is possible to increase security during data transmission between a plurality of signal processing devices in a vehicle.

Meanwhile, in response to the second certificate being verified, the server virtual machine may be configured to encrypt a symmetric key, and to transmit a security key, including the encrypted symmetric key, to the second server virtual machine. Accordingly, it is possible to increase security during data transmission between a plurality of signal processing devices in a vehicle.

Meanwhile, when encrypting the symmetric key, the server virtual machine may be configured to encrypt the symmetric key based on a public key of the second signal processing device. Accordingly, it is possible to increase security during data transmission between a plurality of signal processing devices in a vehicle.

Meanwhile, the processor may be configured to execute a security executor including a policy manager, wherein the policy manager may be configured to transmit a sharing policy or a topic based on the sharing policy to the server virtual machine, and the server virtual machine may be configured to transmit the sharing policy or the topic based on the sharing policy to the second server virtual machine. Accordingly, it is possible to increase security during data transmission between a plurality of signal processing devices in a vehicle.

Meanwhile, the processor may be configured to execute a security executor including a policy manager, wherein the server virtual machine may be configured to receive a policy table from the second server virtual machine, and the policy manager may be configured to update the policy table, wherein the server virtual machine may be configured to transmit the updated policy table to the second server virtual machine. Accordingly, it is possible to increase security during data transmission between a plurality of signal processing devices in a vehicle.

Meanwhile, in response to connection with the second signal processing device, the server virtual machine may be configured to determine whether a second server virtual machine is executed in the second signal processing device, wherein in response to the second server virtual machine being executed, the server virtual machine may be configured to set the signal processing device as a master signal processing device and the second signal processing device as a slave signal processing device based on the ASIL ratings. Accordingly, it is possible to increase security during data transmission between a plurality of signal processing devices in a vehicle.

Meanwhile, in the case in that in the second signal processing device is connected, the second server virtual machine is not executed in the second signal processing device, and authentication or encryption is not supported, the server virtual machine may be configured to set the signal processing device as a master signal processing device and the second signal processing device as a slave signal processing device. Accordingly, it is possible to increase security during data transmission between a plurality of signal processing devices in a vehicle.

A signal processing device according to another embodiment of the present disclosure includes: a shared memory; and a processor configured to perform signal processing for at least one display, wherein the processor is configured to execute a server virtual machine and at least one guest virtual machine on a hypervisor in the processor, wherein in response to connection with a cartridge-based second signal processing device, the server virtual machine is configured to transmit a security key to a security interface in the second signal processing device. Accordingly, it is possible to increase security during data transmission between a plurality of signal processing devices in a vehicle.

Meanwhile, the server virtual machine may be configured to transmit a certificate together when transmitting the security key to the security interface in the second signal processing device. Accordingly, it is possible to increase security during data transmission between a plurality of signal processing devices in a vehicle.

Meanwhile, the server virtual machine may be configured to store data to be shared with the second signal processing device to the shared memory. Accordingly, it is possible to efficiently perform data transmission between a plurality of signal processing devices in a vehicle.

Meanwhile, the server virtual machine may be configured to selectively encrypt the data to be shared with the second signal processing device based on impacting levels according to a data type and ASIL ratings, and to store the encrypted data to the shared memory. Accordingly, levels of security between the plurality of signal processing devices in a vehicle may be classified based on the ASIL.

Meanwhile, the server virtual machine may be configured to receive a second certificate from the second signal processing device, and a verifier in the hypervisor is configured to verify the second certificate, wherein in response to the second certificate being verified, the server virtual machine is configured to transmit the security key to a security interface in the second signal processing device. Accordingly, it is possible to increase security during data transmission between a plurality of signal processing devices in a vehicle.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view referred to in the description of operation of the system driven in the signal processing device according to the embodiment of the present disclosure;
FIGS. 7A to 9D are diagrams referred to in the description of FIG. 5 or FIG. 6;
FIG. 10 is a diagram illustrating in detail the system running on the signal processing device of FIG. 5; and;
FIGS. 11A to 13C are diagrams referred to in the description of FIG. 10;
FIG. 14 is an exemplary internal block diagram of a vehicle display apparatus according to an embodiment of the present disclosure;
FIGS. 15 to 16C are diagrams referred to in the description of FIG. 14;
FIG. 17 is an exemplary internal block diagram of a vehicle display apparatus according to another embodiment of the present disclosure; and
FIGS. 18 to 19B are diagrams referred to in the description of FIG. 17.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

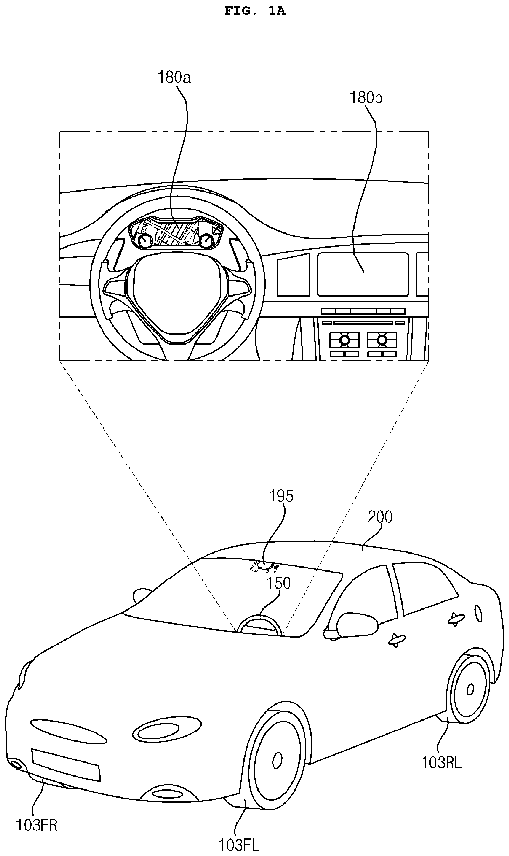

FIG. 1A is a view showing an example of the exterior and interior of a vehicle.

Referring to the figure, the vehicle 200 is moved by a plurality of wheels 103FR, 103FL, 103RL, ... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

The embodiment of the present disclosure proposes a scheme for dividing data processing in a display apparatus 100 for vehicles including a plurality of displays 180a and 180b.

Meanwhile, the vehicle 200 described in this specification may be a concept including all of a vehicle having an engine as a power source, a hybrid vehicle having an engine and an electric motor as a power source, and an electric vehicle having an electric motor as a power source.

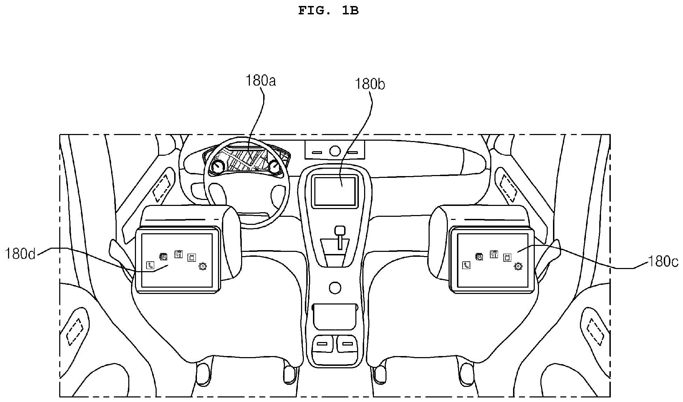

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be mounted in the vehicle.

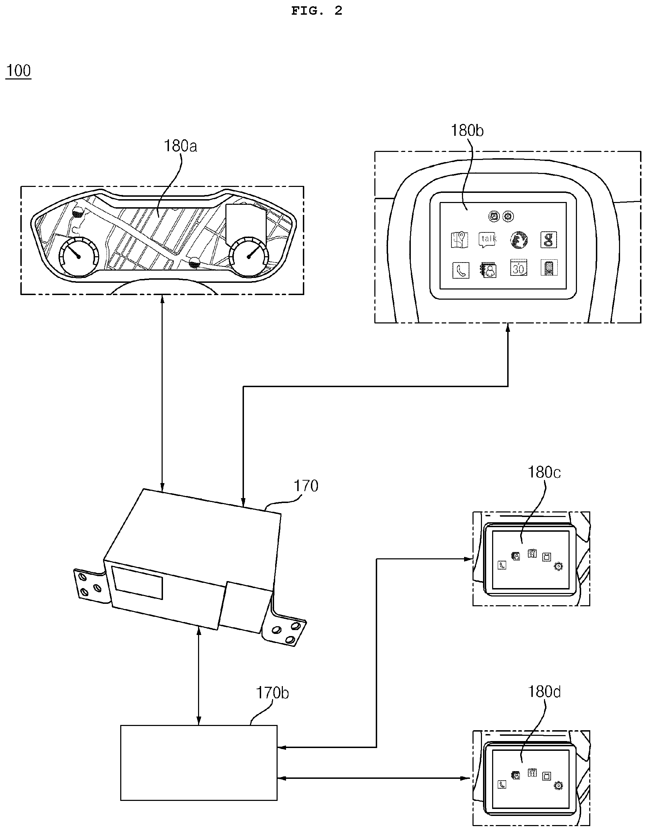

FIG. 2 is a view showing the external appearance of a display apparatus for vehicles according to an embodiment of the present disclosure.

A display apparatus 100 for vehicles (hereinafter referred to as a vehicle display apparatus) according to the embodiment of the present disclosure may include a plurality of displays 180a and 180b, a signal processing device 170 configured to perform signal processing to display images, information, and the like on the plurality of displays 180a and 180b, at least one display 180c and 180d, and a second signal processing device 170b configured to perform signal processing to display images, information, and the like on the at least one display 180c and 180d.

The signal processing device 170 and the second signal processing device 170b may be spaced apart from each other.

Meanwhile, the second signal processing device 170b and the signal processing device 170 may operate on different operating systems OS.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

A third display 180c of the at least one display 180c and 180d may be a right rear seat entertainment display of the vehicle, and a fourth display 180d thereof may be a left rear seat entertainment display of the vehicle.

The at least one display 180c and 180d may display driving state information, simple navigation information, various types of entertainment information, or an image.

The signal processing device 170 may have a processor 175 provided therein, and may execute a server virtual machine 520 and first and second guest virtual machines 530 and 540 on a hypervisor 505 in the processor 175.

The server virtual machine 520 may correspond to a server virtual machine, and the first and second guest virtual machines may correspond to guest virtual machines.

Accordingly, data communication may be performed between the server virtual machine 520 and the first guest virtual machine 530 or the second guest virtual machine 540 according to a server interface and a client interface.

The first guest virtual machine 530 may operate for the first display 180a, and the second guest virtual machine 540 may operate for the second display 180b.

Meanwhile, the server virtual machine 520 in the processor 175 may share at least some of data with the first guest virtual machine 530 and the second guest virtual machine 540 for divided processing of data.

Meanwhile, the server virtual machine 520 in the processor 175 may receive and process wheel speed sensor data of the vehicle, and may transmit the processed wheel speed sensor data to at least one of the first guest virtual machine 530 or the second guest virtual machine 540, or to the second signal processing device 170b. Accordingly, at least one virtual machine or the second signal processing device may share the wheel speed sensor data of the vehicle.

Meanwhile, the server virtual machine 520 in the processor 175 writes some of data in a first shared memory 508a so that the data may be transmitted to the first guest virtual machine 530, and writes some other of data in the first shared memory 508a so that the data may be transmitted to the second guest virtual machine 540. The first guest virtual machine 530 and the second guest virtual machine 540 may process the received data and write the processed data in a second shared memory (not shown). Accordingly, the plurality of signal processing devices in the vehicle may efficiently perform data processing.

Meanwhile, the server virtual machine 520 in the processor 175 may be configured to set a shared memory 508 based on the hypervisor 505 so that the same data may be transmitted to the first guest virtual machine 530 and the second guest virtual machine 540. Accordingly, the first display 180a and the second display 180b in the vehicle may display the same information or the same image in a synchronized state.

The signal processing device 170 may include the processor 175 and may execute the server virtual machine 520 and the first and second guest virtual machines 530 and 540 on the hypervisor 505 in the processor 175.

The server virtual machine 520 may correspond to a server virtual machine, and the first and second guest virtual machines may correspond to guest virtual machines.

Accordingly, data communication may be performed between the server virtual machine 520 and the first guest virtual machine 530 or the second guest virtual machine 540 according to a server interface and a client interface.

Meanwhile, the second signal processing device 170b may include a second processor 175b and may execute a server virtual machine VIMc and a guest virtual machine VIMd on a hypervisor 505 in the second processor 175b.

Meanwhile, some of the plurality of displays 180a to 180d may be operated based on a Linux Operating System (OS), and others may be operated based on a Web Operating System (OS) .

The signal processing device 170 and the second signal processing device 170b according to the embodiment of the present disclosure may divide and process data for the displays 180a to 180d that operate on various operating systems.

Meanwhile, the signal processing device 170 and the second signal processing device 170b according to the embodiment of the present disclosure may also control the displays 180a to 180d, operating on various operating systems, to display the same information or the same image in a synchronized state.

Meanwhile, the signal processing device 170 and the second signal processing device 170b according to the embodiment of the present disclosure may share at least some of data for divided processing of the data. Accordingly, the plurality of signal processing devices 170 and 170b for the plurality of displays in the vehicle may divide and process data. In addition, the plurality of signal processing devices 170 and 170b may efficiently manage resources.

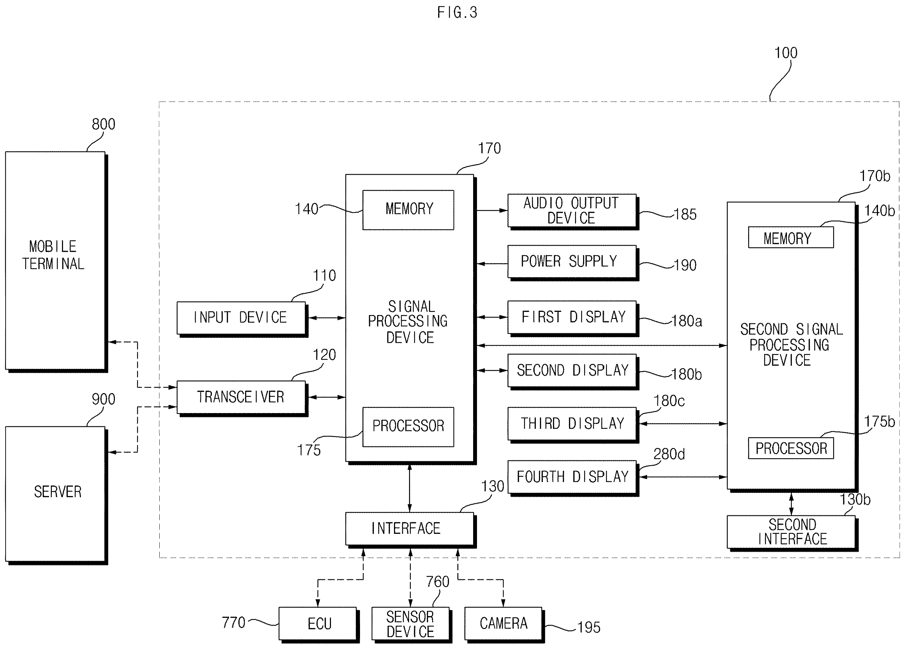

FIG. 3 illustrates an example of an internal block diagram of the display apparatus for vehicles according to the embodiment of the present disclosure.

Referring to the FIG. 3, the display apparatus 100 for vehicles according to the embodiment of the present disclosure may include an input device 110, a transceiver 120, an interface 130, a second interface 130b, a signal processing device 170, a plurality of displays 180a to 180d, an audio output device 185, and a power supply 190.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 750, and may transmit the received information to the signal processing device 170.

The second interface 130b may receive sensor information and the like from the electronic control unit (ECU) 770 or the sensor device 760, and may transmit the received information to the second signal processing device 170b.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor, the server virtual machine, and the first and second guest virtual machines which are to be executed in the processor 175.

Meanwhile, as illustrated herein, the memory 140 may be provided in the signal processing device 170 but is not limited thereto, and may be provided outside the signal processing device 170.

The audio output device 185 may convert an electrical signal from the signal processing device 170 into an audio signal, and may output the audio signal. To this end, the audio output device 185 may include a speaker and the like.

The power supply 190 may supply power necessary to operate components under control of the signal processing device 170. In particular, the power supply 190 may receive power from a battery in the vehicle.

The signal processing device 170 may control the overall operation of each unit in the vehicle display apparatus 100.

For example, the signal processing device 170 may include the processor 175 configured to perform signal processing for at least one of the first display 180a or the second display 180b, and the memory 140.

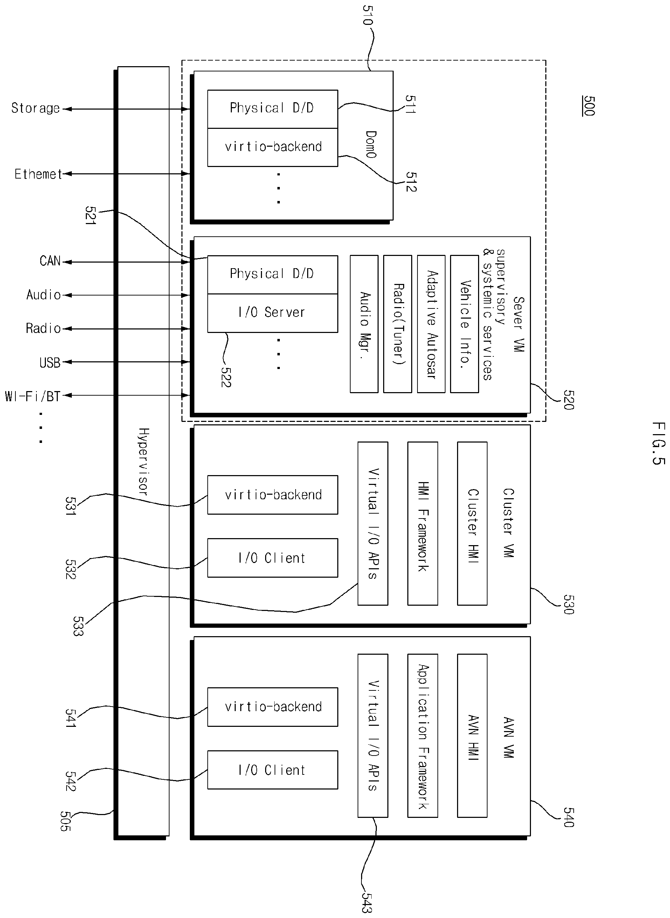

The processor 175 may execute the server virtual machine 520 and the first and second guest virtual machines 530 and 540 on the hypervisor 505 (see FIG. 5) in the processor 175.

Among the server virtual machine 520 and the first and second guest virtual machines 530 and 540 (see FIG. 5), the server virtual machines 520 may be referred to as a server virtual machine, and the first and second guest virtual machines 530 and 540 may be referred to as guest virtual machines.

In this case, the first guest virtual machine 530 may operate for the first display 180a, and the second guest virtual machine 540 may operate for the second display 180b.

For example, the server virtual machine 520 in the processor 715 may receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

In another example, the server virtual machine 520 may directly receive and process CAN communication data, audio data, radio data, USB data, and wireless communication data for the first and second guest virtual machines 530 and 540.

Further, the server virtual machine 520 may transmit the processed data to the first and second guest virtual machines 530 and 540.

Accordingly, among the server virtual machine 520 and the first and second guest virtual machines 530 and 540, only the server virtual machine 520 may receive communication data and external input data and may perform signal processing, whereby load in signal processing by the other virtual machines may be reduced and 1:N data communication may be achieved, and therefore synchronization at the time of data sharing may be achieved.

Meanwhile, the server virtual machine 520 writes some of data in a first shared memory 508a so that the data may be transmitted to the first guest virtual machine 530, and writes some other of data in the first shared memory 508a so that the data may be transmitted to the second guest virtual machine 540. The first guest virtual machine 530 and the second guest virtual machine 540 may process the received data and write the processed data in a second shared memory (not shown). Accordingly, the plurality of signal processing devices in the vehicle may efficiently perform data processing.

In this case, the data may be any one of image data, audio data, navigation data, and voice recognition data.

Meanwhile, the server virtual machine 520 may process some other of data and may write the processed data in the second shared memory (not shown). That is, the server virtual machine 520 may perform data processing in addition to the first guest virtual machine 530 and the second guest virtual machine 540.

Meanwhile, the server virtual machine 520 may create command queues for distributed processing of data in the first guest virtual machine 530 and the second guest virtual machine 540. Accordingly, the plurality of virtual machines may divide and process data.

Meanwhile, if the first guest virtual machine 530 and the second guest virtual machine 540 share the same data, the server virtual machine 520 in the processor 175 may create one command queue. Accordingly, the same data may be synchronized and shared.

Meanwhile, the server virtual machine 520 may create command queues corresponding to the number of virtual machines for distributed processing of data.

Meanwhile, for distributed processing of data, the server virtual machine 520 may control at least some of data to be transmitted to at least one of the first guest virtual machine 530 or the second guest virtual machine 540, or to the second signal processing device 170b.

For example, the server virtual machine 520 may allocate the first shared memory 508a for transmitting at least some of data to at least one of the first guest virtual machine 530 or the second guest virtual machine 540, or to the second signal processing device 170b, and image data processed by the first guest virtual machine 530 or the second guest virtual machine 540 may be written in the second shared memory (not shown).

Meanwhile, the server virtual machine 520 may be configured to write data in the shared memory 508, whereby the first guest virtual machine 530 and the second guest virtual machine 540 share identical data.

For example, the server virtual machines 520 may write radio data or wireless communication data in the shared memory 508, so that the first guest virtual machine 530 and the second guest virtual machine 540 may share the same data. Accordingly, 1:N data sharing may be achieved.

As a result, the server virtual machine 520 may process most of the data, thereby allowing 1:N data sharing.

Meanwhile, the server virtual machine 520 in the processor 175 may be configured to set up the shared memory 508 based on the hypervisor 505 for transmission of identical data to the first guest virtual machine 530 and the second guest virtual machine 540.

That is, the server virtual machine 520 in the processor 175 may transmit identical data to the first guest virtual machine 530 and the second guest virtual machine 540 in a synchronized manner based on the shared memory 508 based on the hypervisor 505. Accordingly, the plurality of displays 180a and 180b in the vehicle may display identical images in a synchronized manner.

Meanwhile, the signal processing device 170 may process various signals, such as an audio signal, an image signal, and a data signal. To this end, the signal processing device 170 may be implemented in the form of a system on chip (SOC) .

The second signal processing device 170b performs signal processing for the displays 180c and 180d for vehicles, and to this end, the second signal processing device 170b may include a second processor 175b and a second memory 140b.

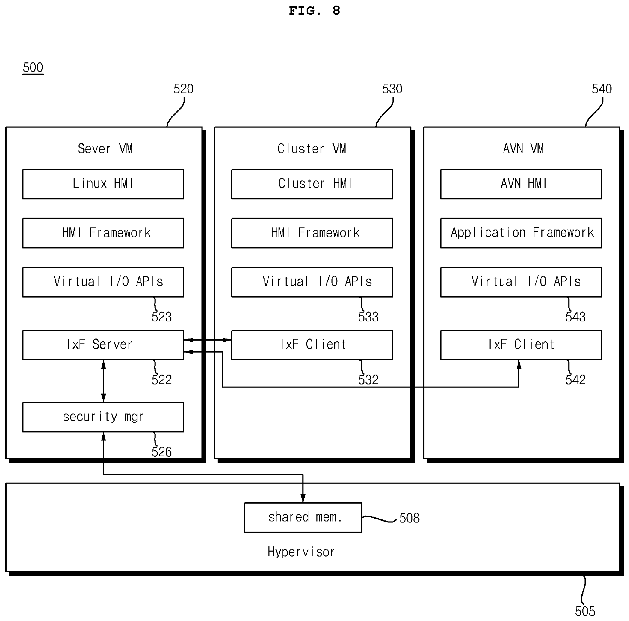

The second processor 175b may execute a plurality of virtual machines 520b, 530b, and 540b (see FIG. 8) on the hypervisor 505 (FIG. 8) in the second processor 175b.

Meanwhile, the second processor 175b may also execute the server virtual machine and guest virtual machines on the hypervisor in the second processor 175b.

For example, the server virtual machine in the second processor 175b may receive, process, and output vehicle sensor data, position information data, camera image data, audio data, or touch input data from the server virtual machine 520 in the processor 175 of the signal processing device 170.

In another example, the server virtual machine in the second processor 175b may receive and process CAN communication data, audio data, radio data, USB data, and wireless communication data from the server virtual machine 520 in the processor 175 of the signal processing device 170 for the guest virtual machine.

Further, the server virtual machine in the second processor 175b may transmit the processed data to the guest virtual machines.

Accordingly, among the server virtual machine and guest virtual machines in the second processor 175b, only the server virtual machine receives communication data and external input data and performs signal processing, thereby reducing load in signal processing by the guest virtual machines, and allowing 1:N data communication, such that synchronization at the time of data sharing may be achieved.

Meanwhile, the server virtual machine in the second processor 175b may be configured to set up a shared memory 508b (see FIG. 8) based on the hypervisor 505 for transmitting identical data to the guest virtual machines.

That is, the server virtual machine in the second processor 175b may transmit the identical data to the guest virtual machines in a synchronized manner based on the shared memory 508b based on the hypervisor 505. Accordingly, the plurality of displays 180c and 180d in the vehicle may display identical images in a synchronized manner.

Meanwhile, the second signal processing device 170b may process various signals, such as an audio signal, an image signal, a data signal, and the like. To this end, the second signal processing device 170b may be implemented in the form of a system on chip (SOC).

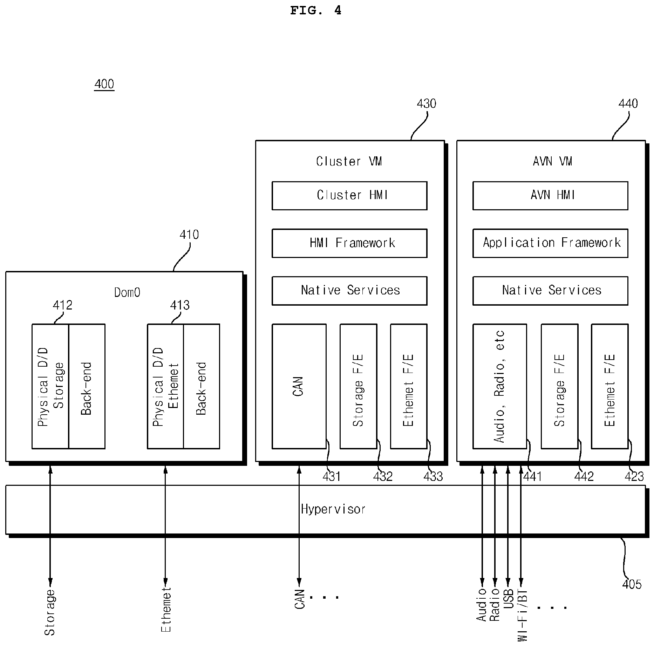

FIG. 4 is a view showing a system driven in a signal processing device related to the present disclosure.

Referring to the figure, FIG. 4 is a view illustrating that virtual machines are used for the cluster display 180a and the AVN display 180b.

In the system 400 operated in the signal processing device of FIG. 4, a cluster virtual machine 430 and an AVN virtual machine 440 are executed on a hypervisor 405 in the processor 175 of the signal processing device 170.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are divided into the server virtual machine and the guest virtual machines such that various memory data, communication data, and the like are input and output in the server virtual machine, instead of the guest virtual machines, which will be described below with reference to FIG. 5 and subsequent figures.

FIG. 5 is a view showing an example of a system running on a signal processing device according to an embodiment of the present disclosure.

Referring to FIG. 5, in a system 500 of FIG. 5, the server virtual machine 520, the first guest virtual machine 530, and the second guest virtual machine 540 are executed on the hypervisor 505 in the processor 175 of the signal processing device 170.

The first guest virtual machine 530 may be a virtual machine for the cluster display 180a, and the second guest virtual machine 540 may be a virtual machine for the AVN display 180b.

That is, the first guest virtual machine 530 and the second guest virtual machine 540 may be operated for image rendering of the cluster display 180a and the AVN display 180b, respectively.

Meanwhile, it is also illustrated that in the system 500 running on the signal processing device 170 of FIG. 5, a legacy virtual machine 510 is also executed on the hypervisor 505 in the processor 175.

The legacy virtual machine 510 may include an interface 511 for data communication and Ethernet communication with the memory 140.

Meanwhile, the legacy virtual machine 510 may further include a virtio-backend interface 512 for data communication with the first and second guest virtual machines 530 and 540.

The server virtual machine 520 may include an interface 521 for input and output of audio data, radio data, USB data, and wireless communication data, and an input and output server interface 522 for data communication with the guest virtual machines.

That is, the server virtual machine 520 may provide inputs/outputs (I/O) difficult to virtualize with standard virtualization technology (VirtIO) to a plurality of guest virtual machines, e.g., the first and second guest virtual machines 530 and 540.

Meanwhile, the server virtual machine 520 may control radio data and audio data at a supervisor level, and may provide the data to a plurality of guest virtual machines, e.g., the first and second guest virtual machines 530 and 540, and the like.

Meanwhile, the server virtual machine 520 may process vehicle data, sensor data, and surroundings-of-vehicle information, etc., and may provide the processed data or information to a plurality of guest virtual machines, e.g., the first and second guest virtual machines 530 and 540, and the like.

Meanwhile, the server virtual machine 520 may provide supervisory services, such as processing of vehicle data and audio routing management, and the like.

Next, the first guest virtual machine 530 may include an input and output client interface 532 for data communication with the server virtual machine 520 and APIs 533 configured to control the input and output client interface 532.

In addition, the first guest virtual machine 530 may include a virtio-backend interface for data communication with the legacy virtual machine 510.

The first guest virtual machine 530 may receive memory data by communication with the memory 140 and Ethernet data by Ethernet communication from the virtio-backend interface 512 of the legacy virtual machine 510 through the virtio-backend interface.

Next, the second guest virtual machine 540 may include an input and output client interface 542 for data communication with the server virtual machine 520 and APIs 543 configured to control the input and output client interface 542.

In addition, the second guest virtual machine 540 may include a virtio-backend interface for data communication with the legacy virtual machine 510.

The second guest virtual machine 540 may receive memory data by communication with the memory 140 and Ethernet data by Ethernet communication from the virtio-backend interface 512 of the legacy virtual machine 510 through the virtio-backend interface.

Meanwhile, unlike FIG. 5, the legacy virtual machine 510 may be provided in the server virtual machine 520.

In the system 500, CAN communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Also, in the system 500 of FIG. 5, audio data, radio data, USB data, and wireless communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Meanwhile, in the system 500 of FIG. 5, the first and second guest virtual machines 530 and 540 may operate on different operating systems

For example, the first guest virtual machine 540 may operate on Linux OS, and the second guest virtual machine 540 may operate on a Web-based OS.

In the server virtual machine 520, the shared memory 508 based on the hypervisor 505 may be set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may display identical data or identical images in a synchronized manner.

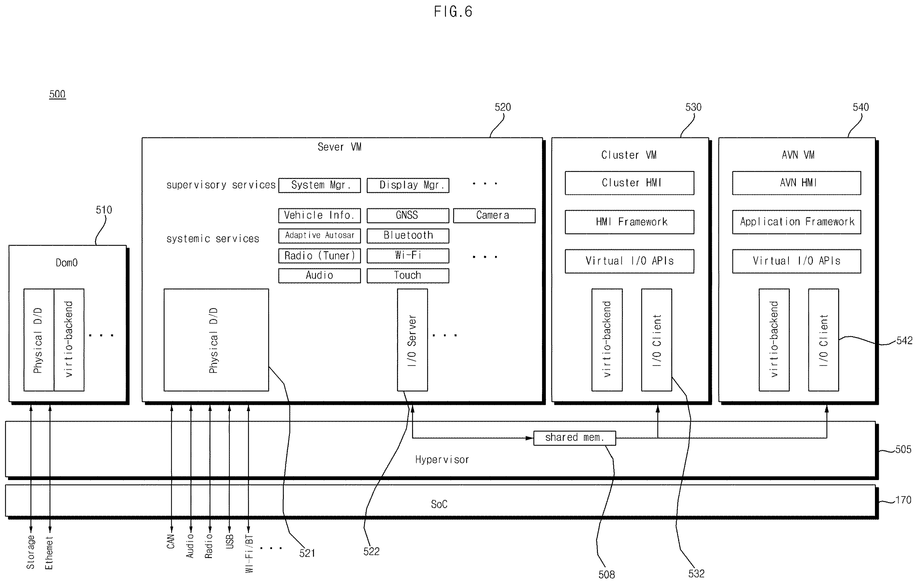

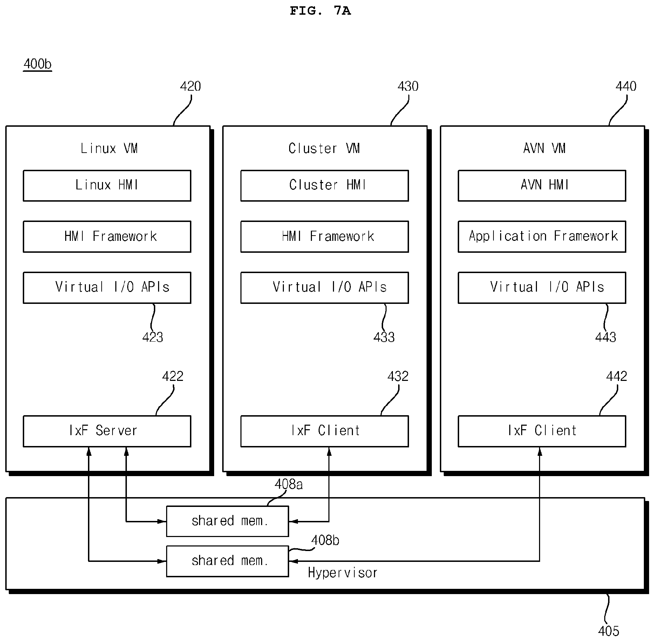

FIG. 6 is a diagram referred to in the description of operation of a system running on a signal processing device according to the embodiment of the present disclosure, and FIGS. 7A to 9D are diagrams referred to in the description of FIG. 5 or FIG. 6.

First, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may be configured to set up the shared memory 508 based on the hypervisor 505 for data transmission to the first and second guest virtual machines 530 and 540.

For example, as an example of identical data, identical image data may be transmitted from the server virtual machine 520 to the first guest virtual machine 530 and the second guest virtual machine 540. Accordingly, the plurality of displays 180a and 180b in the vehicle may display identical images in a synchronized manner.

Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may transmit identical data to the first and second guest virtual machines 530 and 540 in a synchronized manner based on the shared memory 508 based on the hypervisor 505.

For example, examples of identical data may include CAN communication data, audio data, radio data, USB data, wireless communication data, position information data, or touch data, and the like. Accordingly, the plurality of displays 180a and 180b in the vehicle may display identical data in a synchronized manner.

Meanwhile, the server virtual machine 520 in the processor 175 may receive and process position information data that changes according to movement, and may provide the processed data to the first guest virtual machine 530 or the second guest virtual machine 540. Accordingly, instead of 1:1 data communication, 1:N data communication between the virtual machines may be achieved based on the shared memory.

Meanwhile, the first guest virtual machine 530 and the second guest virtual machine 540 may be driven by different operating systems. Accordingly, even when the plurality of virtual machines are driven by different operating systems, high-speed data communication may be performed.

Meanwhile, although not illustrated in FIG. 6, the legacy virtual machine 510 may transmit memory data from the memory 140 and Ethernet data by Ethernet communication to the first guest virtual machine 530 and the second guest virtual machines 540 in a synchronized manner based on the shared memory 508 based on the hypervisor 505. That is, 1:N data communication of the memory data or the Ethernet data may be performed. Accordingly, identical data may be transmitted in a synchronized manner.

Meanwhile, the server virtual machine 520 in the processor 175 may execute supervisory services, such as a system manager, a display manager, and the like.

Meanwhile, the server virtual machine 520 in the processor 175 may execute systemic services, such as vehicle information service, position information service, camera service, AUTOSAR, Bluetooth communication service, radio service, Wi-Fi service, audio service, touch service, and the like.

Meanwhile, similarly to FIG. 5, the signal processing device 170 may further include the secured storage device 509 configured to store a digital signature and a public key of the external server 900, in addition to the shared memory 508 and the processor 175.

Meanwhile, the signal processing device 170 may further include a security executor TEE configured to receive an encrypted data from the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, as illustrated in the drawing, the security executor TEE may also be executed by the processor 175 in the signal processing device 170.

The security executor TEE may include a policy manager PM configured to set data so that data, shared with the first guest virtual machine 530 and the second guest virtual machine 540, may change based on a sharing policy, and an interface SS configured to exchange data with the secured storage device 509.

Meanwhile, the server virtual machine 520 and the first and second guest virtual machines 530 and 540 may include security interfaces 525, 535, and 545, respectively, which are configured to decrypt the encrypted data received from the shared memory 508 or to store the encrypted data in the shared memory 508.

FIG. 7A is a diagram illustrating an example of three virtual machines 420, 420, and 430 operating on a system 400b of FIG. 4.

Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

If a separate shared memory is used for transmitting the same first data as illustrated in FIG. 7A, there is a drawback in that resources are wasted and synchronization is not easy.

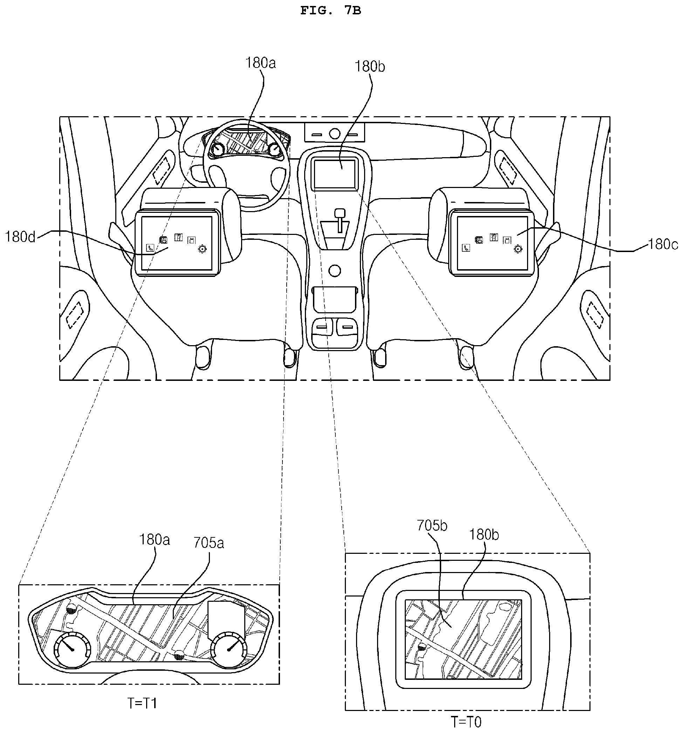

FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

As described above, if the first virtual machine 520 and 420 transmits identical image data based on the separate shared memory as illustrated in FIG. 7A, there is a drawback in that images may not be displayed in a synchronized manner as illustrated in FIG. 7B.

In order to solve this problem, the present disclosure proposes a scheme for allocating a single shared memory at the time of transmission of identical data. Consequently, 1:N data communication is performed, whereby synchronized data transmission is achieved.

FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

Accordingly, the plurality of displays 180a and 180b in the vehicle may display identical images in a synchronized manner.

Meanwhile, high-speed data communication may be performed among the plurality of virtual machines 520, 530, and 540. Further, high-speed data communication may be performed even when the plurality of virtual machines 520, 530, and 540 are driven by different operating systems.

Meanwhile, the server virtual machine 520 in the processor 175 may transmit data, processed by the server virtual machine 520, to another virtual machine based on a single shared memory 508 instead of allocating memories, the number of which corresponds to the number of virtual machines. Accordingly, instead of 1:1 data communication, 1:N data communication between the virtual machines may be achieved based on the shared memory 508.

Meanwhile, the server virtual machine 520 in the processor 175 may include the input and output server interface 522 and a security manager 526.

Meanwhile, the first guest virtual machine 530 and the second guest virtual machine 540 may include input and output client interfaces 532 and 542, respectively. Accordingly, high-speed data communication between the plurality of virtual machines may be performed based on the input and output server interface 522 and the input and output client interfaces 532 and 542.

The input and output server interface 522 in the first virtual machine 520 may receive requests for transmission of identical data from the respective input and output client interfaces 532 and 542 in the first guest virtual machine 530 and the second guest virtual machine 540, and may transmit shared data to the shared memory 508 through the security manager 526 based thereon.

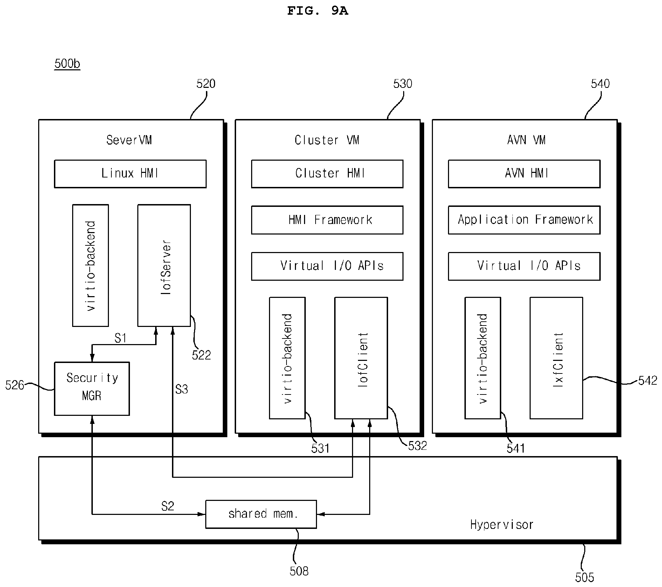

FIG. 9A is a diagram illustrating in further detail transmission of shared data.

Referring to the figure, in order to transmit shared data, the input and output server interface 522 in the server virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, after allocation of the shared memory 508, the input and output server interface 522 transmits information regarding the shared memory 508 including key data to the input and output client interfaces 532 and 542 (S4). In this case, the key data may be data for data access.

That is, after setting up the shared memory 508, the server virtual machine 520 in the processor 175 may transmit information regarding the shared memory 508 to the first guest virtual machine 530 and the second guest virtual machine 540.

The input and output client interfaces 532 and 542 may access the shared memory 508 based on the received key data (S5), and may copy the shared data from the shared memory 508.

Accordingly, the first guest virtual machine 530 and the second guest virtual machine 540 may access the shared memory 508, and thus, may share the shared data.

For example, in the case in which the shared data are image data, the first guest virtual machine 530 and the second guest virtual machine 540 may share the image data, and thus, the plurality of displays 180a and 180b in the vehicle may display the same shared image in a synchronized manner.

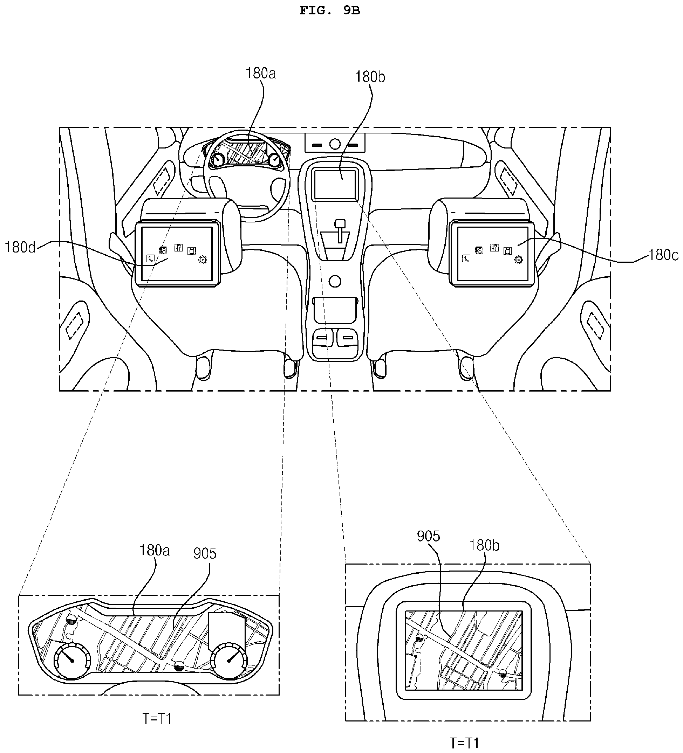

FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

FIG. 9B illustrates that an image 905 displayed on the first display 180a and an image 905 displayed on the second display 180b are synchronized, such that the same image may be displayed.

That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may display the same images in a synchronized manner. Further, high-speed data communication among the plurality of virtual machines 520, 530, and 540 may be performed.

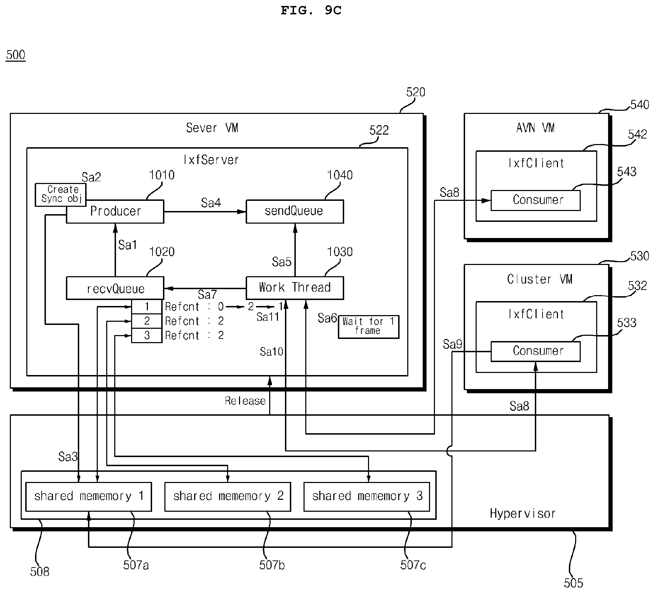

FIG. 9C is a diagram illustrating in detail the input and output server interface 522 of FIG. 8.

Referring to the figure, a plurality of buffers 507a, 507b, and 507c may be set up in the shared memory 508.

Meanwhile, the input and output client interfaces 532 and 542 in the first guest virtual machine 530 and the second guest virtual machine 540 may include consumers 533 and 543, respectively.

Meanwhile, the input and output server interface 522 in the server virtual machine 520 may include a producer 1010 configured to create a synchronization object for graphical synchronization, a recvQueue 1020 configured to manage, particularly receive, a queue, a WorkThread 1030 configured to manage a queue and to control operation of the queue, and a sendQueue 1040 configured to manage, particularly transmit, a queue.

First, the producer 1010 receives information regarding the index of an empty index, among the plurality of buffers 507a, 507b, and 507c in the shared memory 508, from the recvQueue 1020 (Sa1). For example, in the case in which the first buffer 507a, among the plurality of buffers 507a, 507b, and 507c, is empty, information regarding the first buffer 507a is received (Sa1).

In particular, the producer 1010 may receive information regarding the first buffer 507a having a reference count refcnt of 0 from the recvQueue 1020.

Next, the producer 1010 creates a synchronization object for graphical synchronization in order to perform writing in the first buffer 507a (Sa2).

Next, the producer 1010 writes data about the created synchronization object in the first buffer 507a in the shared memory 508 (Sa3).

Next, the producer 1010 queues information regarding the first buffer 507a, i.e. a buffer index, to the sendQueue 1040 (Sa4).

Next, in the case in which data are input to the sendQueue 1040, which is periodically monitored, the WorkThread 1030 senses and receives or reads the data (Sa5).

For example, in the case in which information regarding the first buffer 507a is input to the sendQueue 1040, which is monitored, the WorkThread 1030 receives the information.

Meanwhile, the WorkThread 1030 waits until a frame about the created synchronization object is completely drawn (Sa6).

Next, the WorkThread 1030 increases the reference count refcnt of the buffer corresponding to the first buffer 507a by the number of consumers or the number of input and output client interfaces (Sa7).

For example, since the number of consumers 533 and 543 or the number of input and output client interfaces 532 and 542 is two in the figure, the reference count refcnt of the buffer corresponding to the first buffer 507a is increased from 0 to 2.

Next, the WorkThread 1030 transmits the buffer index to the consumers 533 and 543 (Sa8). For example, information corresponding to the first buffer 507a is transmitted (Sa8).

Next, the consumers 533 and 543 access the first buffer 507a in the shared memory 508 using the received buffer index to copy data (Sa9).

Next, the consumers 533 and 543 return the buffer index to the producer 1010 or the WorkThread 1030 after completion of data copying (Sa10).

Next, the producer 1010 reduces the reference count refcnt of the first buffer 507a by 1 based on information or a buffer index received after completion of data copying for each of the consumers 533 and 543.

For example, in the case in which the first consumer 533 completes data copying, the reference count refcnt of the first buffer 507a is reduced from 2 to 1.

Subsequently, in the case in which the second consumer 543 completes data copying, the reference count refcnt of the first buffer 507a is reduced from 1 to 0.

Meanwhile, in the case in which the reference count refcnt of the first buffer 507a is 0, the buffer may be used by the producer 1010.

Similarly, first frame data may be shared using the first buffer 507a, then second frame data may be shared using the second buffer 507b, then third frame data may be shared using the third buffer 507c, and then fourth frame data may be shared using the first buffer 507a again.

That is, the input and output server interface 522 may receive information regarding the empty first buffer 507a in the shared memory 508, may write the first data in the first buffer 507a in the shared memory 508, and may transmit buffer information of the first buffer 507a to the input and output client interfaces 532 and 542 in the first guest virtual machine 530 and the second guest virtual machine 540.

In particular, the reference count of the first buffer 507a may be changed in a first direction (e.g. the reference count being increased) based on writing of the first data in the first buffer 507a, and in case in which copying of the first data to the first buffer 507a is completed, the reference count of the first buffer 507a may be changed in a second direction, which is opposite the first direction, (e.g. the reference count being decreased).

For example, the consumers 533 and 543 in the respective input and output client interfaces 532 and 542 in the first guest virtual machine 530 and the second guest virtual machine 540 may change the reference count of the first buffer 507a in the first direction (e.g. the reference count being increased) based on writing of the first data in the first buffer 507a.

Meanwhile, in case in which copying of the first data to the first buffer 507a is completed, the producer 1010 in the input and output server interface 522 in the server virtual machine 520 may change the reference count of the first buffer 507a in the second direction, which is opposite the first direction, (e.g. the reference count being decreased). Accordingly, after completion of copying, new data may be written in the first buffer 507a.

Meanwhile, the server virtual machine 520 may write first frame data to third frame data in the first buffer 507a to the third buffer 507c, respectively, among the plurality of buffers 507a to 507c, and the respective input and output client interfaces 532 and 542 in the first guest virtual machine 530 and the second guest virtual machine 540 may sequentially copy the first frame data to the third frame data from the first buffer 507a to the third buffer 507c.

Meanwhile, after the input and output client interfaces 532 and 542 in the second guest virtual machine 540 has completed copying the first frame data from the first buffer 507a, the first guest virtual machine 530 may copy the second frame data from the second buffer 507b. Accordingly, synchronization between the first guest virtual machine 530 and the second guest virtual machine 540 may be performed during data sharing.

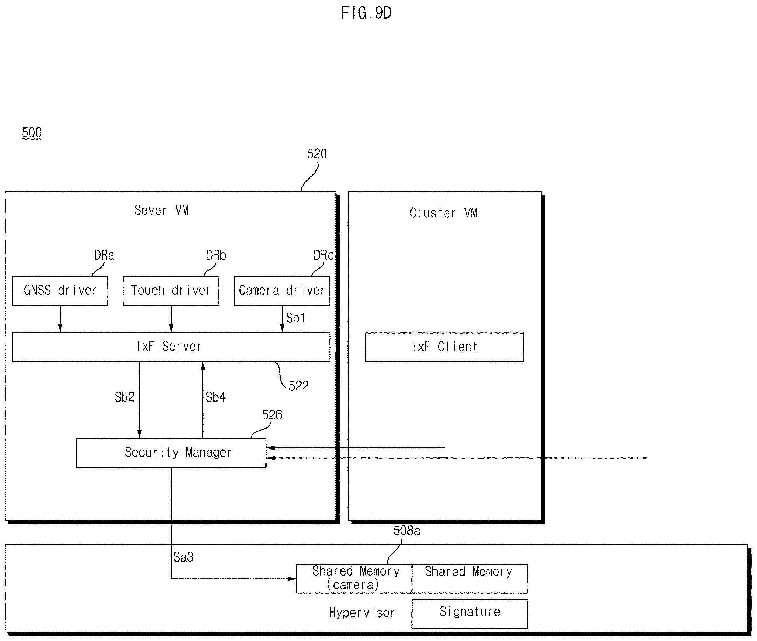

FIG. 9D a diagram illustrating that various drivers DRa, DRb, and DRc are provided in the server virtual machine 520.

Referring to the figure, the server virtual machine 520 may include a position information driver DRa for processing position information, a touch driver DRb for processing touch input, and a camera driver DRc for processing an image from the camera.

Accordingly, the server virtual machine 520 may set up the shared memory 508 based on the hypervisor 505 for each of the position information driver DRa, the touch driver DRb, and the camera driver DRc.

Meanwhile, the input and output server interface 522 may set up a first shared memory 508a for transmission of image data from the camera driver DRc, and may set up a second shared memory 508b for transmission of position information from the position information driver DRa.

Meanwhile, key data of the first shared memory 508a and key data of the second shared memory 508b may be transmitted to the first guest virtual machine 530 and the second guest virtual machine 540, and the first guest virtual machine 530 and the second guest virtual machine 540 may access the first shared memory 508a and the second shared memory 508b based on the key data of the first shared memory 508a and the key data of the second shared memory 508b.

In the figure, an example of sharing data from the position information driver DRa and data from the camera driver DRc is illustrated, such that two shared memories 508a and 508b are illustrated as the shared memory based on the hypervisor 505.

As described above, by setting up the shared memory for each of different types of shared data, it is possible to prevent data confusion during data sharing and to perform high-speed data communication among the plurality of virtual machines 520, 530, and 540.

Meanwhile, when different types of shared data are shared, the security manager 526 may create key data information for data access, and may create and register virtual machine information, information for each piece of equipment, allocated memory address information, buffer index information, and the created key data information in the form of a table.

Meanwhile, the respective input and output client interfaces 532 and 542 in the first guest virtual machine 530 and the second guest virtual machine 540 may be connected to the security manager 526, may request and receive key data by referring to the table in the security manager 526, and may access a corresponding shared memory using the received key data.

Meanwhile, in the case in which data from the camera driver DRc are shared through the first shared memory 508a and in the case in which data from the position information driver DRa are shared through the second shared memory 508b, the virtual machine information in one case and the virtual machine information in the other case are identical to each other, but the information for each piece of equipment, the allocated memory address information, the buffer index information, and the created key data information in one case and the information for each piece of equipment, the allocated memory address information, the buffer index information, and the created key data information in the other case are different from each other. Accordingly, it is possible to prevent data confusion during of sharing of different types of data and to perform high-speed data communication among the plurality of virtual machines 520, 530, and 540.

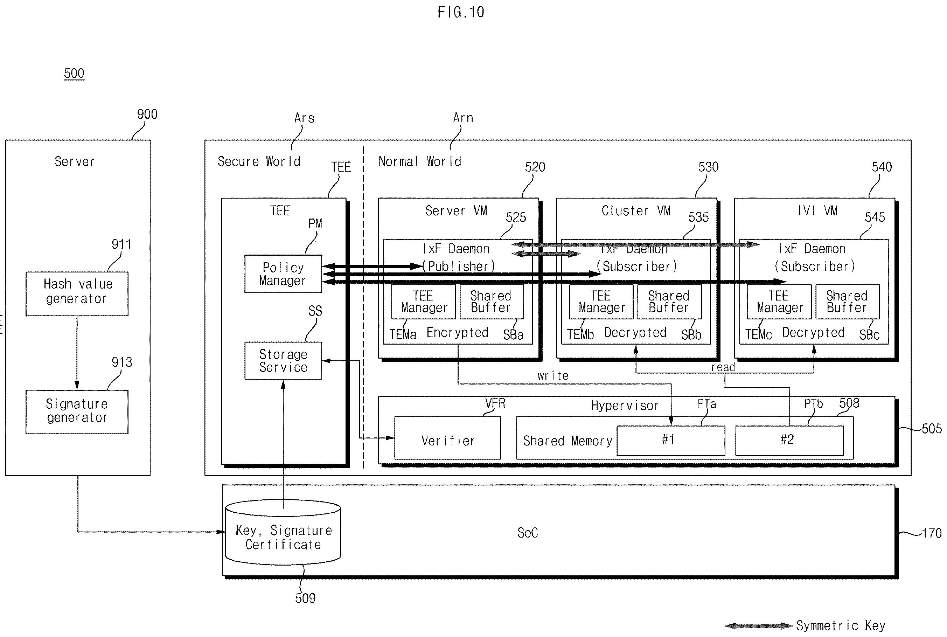

FIG. 10 is a diagram illustrating in detail the system running on the signal processing device of FIG. 5.

Referring to the figure, the signal processing device 170 according to an embodiment of the present disclosure includes the shared memory 508 and the processor 175 configured to perform signal processing for display mounted in a vehicle.

The processor 175 may execute the server virtual machine 520 and the plurality of guest virtual machines 530 and 540 on the hypervisor 505 in the processor 175, in which of the plurality of guest virtual machines 530 and 540, the first guest virtual machine 530 operates for the first display 180a and the second guest virtual machine 540 operates for the second display 180b.

Meanwhile, the server virtual machine 520 according to an embodiment of the present disclosure may be configured to store data to be transmitted to at least one of the first guest virtual machine 530 or the second guest virtual machine 540 in the shared memory 508, and transmits a security key to at least one of the first guest virtual machine 530 or the second guest virtual machine 540. Accordingly, it is possible to increase security during data transmission. Particularly, it is possible to increase security during data transmission to the guest virtual machine 530 or 540. Further, it is possible to increase security during data transmission among the virtual machines 520 to 540.

Meanwhile, at least one of the first guest virtual machine 530 or the second guest virtual machine 540 may receive the data stored in the shared memory 508, and may decrypt the received data based on the security key. Accordingly, it is possible to increase security during data transmission.

Meanwhile, the server virtual machine 520 may be configured to store data to be transmitted to at least one of the first guest virtual machine 530 or the second guest virtual machine 540 in the shared memory 508, may encrypt a symmetric key, and may transmit a security key including the encrypted symmetric key to at least one of the first guest virtual machine 530 or the second guest virtual machine 540. Accordingly, it is possible to increase security during data transmission.

In the drawing, an example is illustrated in which the server virtual machine 520 transmits the security key including the encrypted symmetric key to the first guest virtual machine 530 and the second guest virtual machine 540.

Accordingly, the first guest virtual machine 530 and the second guest virtual machine 540 may receive the encrypted symmetric key and may decrypt the data, stored in the shared memory 508, based on the symmetric key.

Meanwhile, the symmetric key is updated, and the server virtual machine 520 may transmit the security key including the encrypted symmetric key to at least one of the first guest virtual machine 530 or the second guest virtual machine 540 at a first time, and may transmit the security key, including the encrypted and updated symmetric key, to at least one of the first guest virtual machine 530 or the second guest virtual machine 540 at a second time after the first time. Accordingly, it is possible to increase security during data transmission based on the updated security key.

For example, the server virtual machine 520 may generate and update new symmetric keys as random key values at predetermined intervals.

Further, the server virtual machine 520 may transmit the updated symmetric key to the security interface 535 or 545 in at least one of the first guest virtual machine 530 or the second guest virtual machine 540. Accordingly, it is possible to increase security during data transmission based on the updated security key.

Meanwhile, in order to transmit identical data to the first guest virtual machine 530 and the second guest virtual machine 540, the server virtual machine 520 may be configured to store data to be transmitted thereto in the shared memory 508, and may transmit the security key to the first guest virtual machine 530 and the second guest virtual machine 540. Accordingly, while transmitting the identical data, security may increase during transmission of the identical data.

Meanwhile, the first guest virtual machine 530 and the second guest virtual machine 540 may receive the identical data stored in the shared memory 508, and may decrypt the received identical data based on the security key. Accordingly, while transmitting the identical data, security may increase during transmission of the identical data.

Meanwhile, the server 900 according to an embodiment of the present disclosure may include a hash value generator 911 and a digital signature generator 913.

The hash value generator 911 may generate hash value of binaries of the security interfaces 525, 535, and 545 in the respective virtual machines 520, 530, and 540, and the digital signature generator 913 may generate digital signature based on the generated hash value.

Meanwhile, the signal processing device 170 according to an embodiment of the present disclosure may further include the secured storage device 509 configured to store a digital signature and a public key of the external server 900.

Meanwhile, the signal processing device 170 according to an embodiment of the present disclosure may execute the security executor TEE configured to receive encrypted data form the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, unlike the drawing, the signal processing device 170 according to an embodiment of the present disclosure may further include a hardware-based security executor TEE.

Specifically, the signal processing device 170 according to an embodiment of the present disclosure may further include a security executor TEE configured to receive encrypted data form the external server 900, to decrypt the encrypted data from the server 900 based on the digital signature and the public key of the server 900, and to transmit the decrypted data to the server virtual machine 520 or at least one of the plurality of guest virtual machines 530 or 540. Accordingly, while increasing security when data is received from the external server 900, data may be transmitted to internal virtual machines.

Meanwhile, the security executor TEE may include a policy manager PM configured to set data so that data, shared with the first guest virtual machine 530 and the second guest virtual machine 540, may vary based on a sharing policy, and an interface SS for data exchange with the secured storage device 509.

Meanwhile, among the server virtual machine 520, the first guest virtual machine 530, and the second guest virtual machine 540, only the server virtual machine 520 may receive external input data and communication data. Accordingly, interface for the external input data and the communication data may be implemented efficiently.

In this case, the server virtual machine 520 may share the external input data or the communication data with at least one of the first guest virtual machine 530 or the second guest virtual machine 540.

To this end, the server virtual machine 520 may encrypt the external input data or the communication data and control the encrypted external input data or communication data to be stored in the shared memory 508, and may transmit a security key to at least one of the first guest virtual machine 530 or the second guest virtual machine 540.

In response thereto, at least one of the first guest virtual machine 530 or the second guest virtual machine 540 may decrypt the received external input data or communication data based on the security key. Accordingly, interface for the external input data and the communication data may be implemented efficiently.

Meanwhile, the server virtual machine 520 and the first and second guest virtual machines 530 and 540 may include security interfaces 525, 535, and 545, respectively, for decrypting the encrypted data received from the shared memory 508 or for storing the encrypted data in the shared memory 508.

For example, the security interface 525 in the server virtual machine 520 may perform encryption for storing the encrypted data in the shared memory 508, and the first and second guest virtual machines 530 and 540 may decrypt the encrypted data received from the shared memory 508. Accordingly, it is possible to increase security during data transmission. Particularly, it is possible to increase security during data transmission to the guest virtual machine 530 or 540. Further, it is possible to increase security during data transmission among the virtual machines 520 to 540.

Meanwhile, a verifier VFR executed in the hypervisor 505 may verify integrity of the server virtual machine 520 and the plurality of guest virtual machines 530 and 540.

Specifically, the verifier VFR executed in the hypervisor 505 may receive digital signature and hash value of the respective security interfaces 525, 535, and 545 in the server virtual machine 520 and the plurality of guest virtual machines 530 and 540, and a public value of the external server 900, may calculate hash value based on the public key of the server 90 and the digital signature of the respective security interfaces 525, 535, and 545, and may verify integrity of the server virtual machine 520 and the plurality of guest virtual machines 530 and 540 by comparing the calculated hash value with the received hash value. Accordingly, it is possible to increase security during data transmission to virtual machines whose integrity is verified.

For example, in response to the integrity of the server virtual machine 520 and the first guest virtual machine 530 being verified by the verifier VFR executed in the hypervisor 505, the server virtual machine 520 may determine that the server virtual machine 520 and the first guest virtual machine 530 are valid virtual machines, and in response to the integrity of the second guest virtual machine 540 not being verified by the verifier VFR, the server virtual machine 520 may determine that the second guest virtual machine 530 is not a valid virtual machine, may perform control so that data to the transmitted to the first guest virtual machine 530 may be stored in the shared memory 508, and may transmit a security key to the first guest virtual machine 530, without transmitting the security key to the second guest virtual machine 540. Accordingly, it is possible to increase security during data transmission to the virtual machines whose integrity is verified.

In another example, in response to the integrity of the server virtual machine 520, the first guest virtual machine 530, and the second guest virtual machine 540 being verified by the verifier VFR executed in the hypervisor 505, the server virtual machine 520 may perform control so that data to the transmitted to the first guest virtual machine 530 may be stored in the shared memory 508 and may transmit a security key to the first guest virtual machine 530 and the second guest virtual machine 540. Accordingly, it is possible to increase security during data transmission to the virtual machines whose integrity is verified.

In the drawing, an example is illustrated in which the policy manager PM in the security executor TEE shares a sharing policy or a topic based on the sharing policy with the respective security interfaces 525, 535, and 545 in the server virtual machine 520 and the first and second guest virtual machines 530 and 540.

Data to be transmitted to the respective security interfaces 525, 535, and 545 in the server virtual machine 520 and the first and second guest virtual machines 530 and 540 may vary depending on the sharing policy or the topic based on the sharing policy.

Meanwhile, the security interface 525 in the server virtual machine 520 may include a security manager TEma for data exchange with the security executor TEE and a shared buffer SBa for interfacing with the shared memory 508.

Similarly, the respective security interfaces 535 and 545 in the first and second guest virtual machines 530 and 540 may include security managers TEmb and TEmc, respectively, for data exchange with the security executor TEE and shared buffers SBb and SBc, respectively, for interfacing with the shared memory 508.

Meanwhile, in the drawing, ARs may be referred to as secure world, and Arn may be referred to as normal world. That is, the security executor TEE is the secure world, and the hypervisor 505 and the respective virtual machines 520, 530, and 540 may be the normal world.

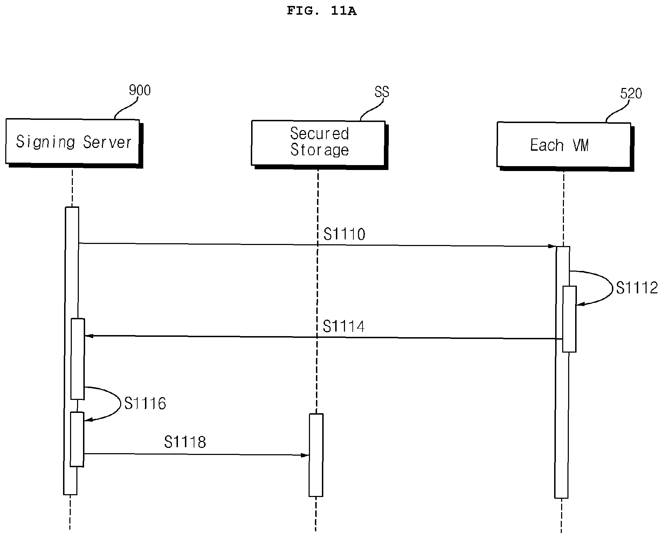

FIGS. 11A to 13C are diagrams referred to in the description of FIG. 10.

First, FIG. 11A is a diagram referred to in the description of operation of the external server 900. Particularly, FIG. 11A is a diagram explaining a signing process of the server 900.

Referring to the figure, the external server 900 may be a signing server.

First, the external server 900 transmits a request for hash value of binaries to the security interfaces 525, 535, and 545 of the respective virtual machines 520, 530, and 540 executed in the signal processing device 170 (S1110).

The security interfaces 525, 535, and 545 of the respective virtual machines 520, 530, and 540 may access binary files to generate hash value for the corresponding files in a predetermined manner (S1112), and may transmit the generated hash value to the server 900 (S1114).

Then, the external server 900 may sign the received hash value with its private key (S1116).

Subsequently, the external server 900 transmits the generated digital signature and a public key of the server 900 to the secured storage device 509 in the signal processing device 170. In response thereto, the secured storage device 509 in the signal processing device 170 stores the digital signature and the public key of the server 900.

Meanwhile, if there is a change in the binaries, the digital signature information may be updated.

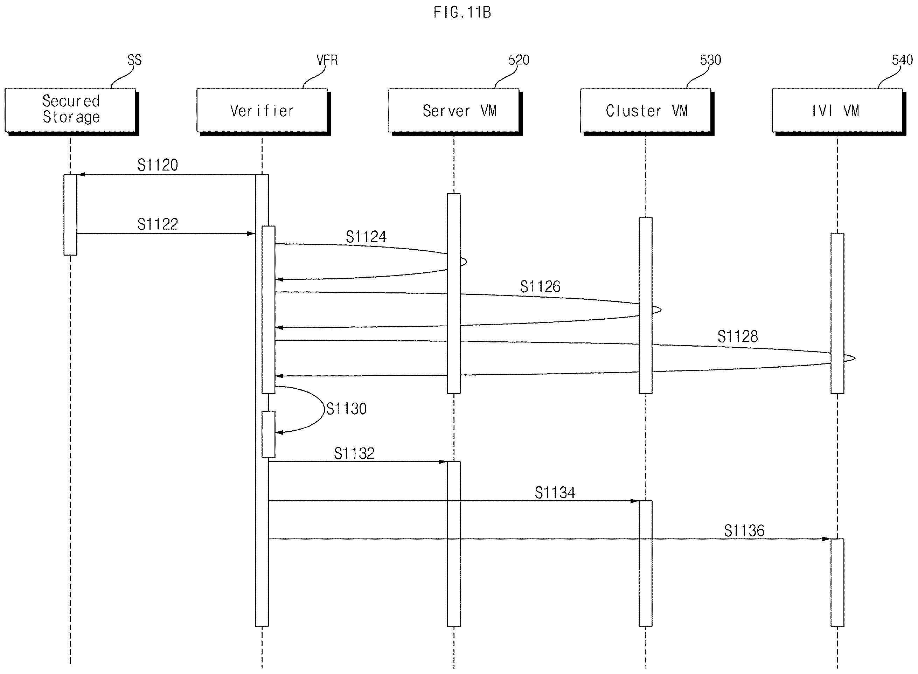

Next, FIG. 11B is a diagram referred to in the description of operation of a verifier. Particularly, FIG. 11B is a diagram explaining a verification process of a verifier VFR in the signal processing device 170.

Referring to the figure, the verifier VFR first accesses the secured storage device 509 and transmits a request for the stored digital signature of binaries of the security interfaces 525, 535, and 545 in the respective virtual machines 520, 530, and 540 and the public key of the server 900 (S1120).

In response thereto, the secured storage device 509 transmits the digital signature of the binaries of the security interfaces 525, 535, and 545 in the respective virtual machines 520, 530, and 540 and the public key of the server 900 to the verifier VFR (S1122).

Meanwhile, as the verifier VFR is capable of accessing file systems of all the virtual machines 520, 530, and 540, the verifier VFR accesses the security interfaces 525, 535, and 545 of the respective virtual machines 520, 530, and 540 and calculates hash value (S1124, S1126, and S1128).

Then, the verifier VFR compares the hash value, obtained in operations 1124 to 1128 (S1124 to S1128), with the hash value calculated based on the public key and the digital signature retrieved from the secured storage device 509 (S1130).

Subsequently, based on comparison result values obtained corresponding to the number of virtual machines, if a comparison result value is true, the verifier VFR determines a virtual machine to be a valid virtual machine, and if a comparison result value is false, the verifier VFR determines a virtual machine to be an invalid virtual machine.

Next, the verifier VFR transmits determination results to the respective virtual machines 520, 530, and 540 (S1132, S1134, and S1136).

For example, in response to determination that the server virtual machine 520 and the first virtual machine 530 are valid virtual machines, data is shared between the server virtual machine 520 and the first guest virtual machine 530, but the data is not shared with the second virtual machine 540.

Meanwhile, in response to determination that the server virtual machine 520 and the first virtual machine 530 are valid virtual machines, connection may be made between the server virtual machine 520 and the first guest virtual machine 530, but no connection is made between the server virtual machine 520 and the second virtual machine 540.

In another example, in response to determination that the server virtual machine 520, the first virtual machine 530, and the second virtual machine 540 are valid virtual machines, data is shared among the server virtual machine 520, the first virtual machine 530, and the second virtual machine 540.

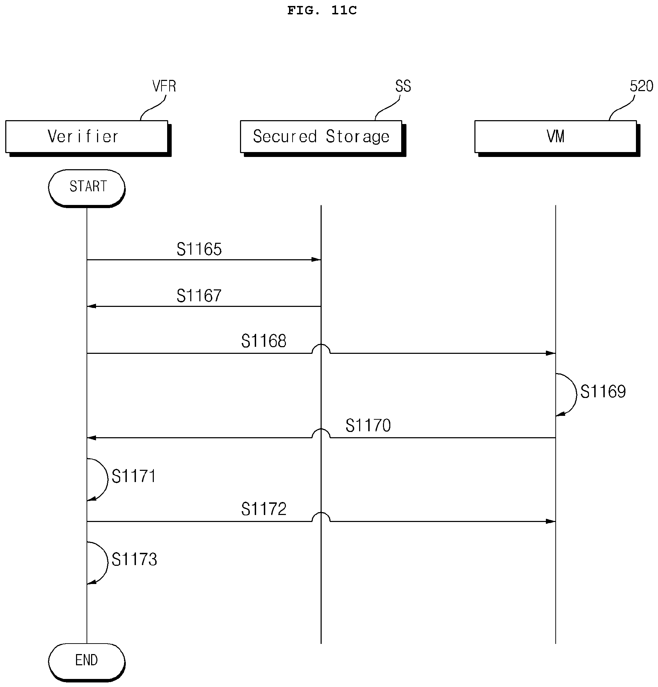

FIG. 11C is a diagram illustrating an example of operation of the verifier VFR.

Referring to FIG. 11C, the verifier VFR transmits a request for digital signature and a public key to the secured storage device 509 (S1165).

In response thereto, the secured storage device 509 transmits the digital signature and the public key to the verifier VFR (S1167).

Then, the verifier VFR transmits a request for hash value to the virtual machine 520 or 530 (S1168).

In response thereto, the virtual machine 520 or 530 calculates hash value (S1169) and transmits the calculated hash value to the verifier VFR (S1170).

Subsequently, the verifier VFR compares the hash value, received from the security interface 525 or 535 of the virtual machine 520 or 530, with the hash value calculated based on the public key and the digital signatures retrieved from the secured storage device 509 (S1171).

Upon comparison, if the hash values coincide, the verifier VFR transmits a result message to the virtual machine 520 or 530 (S1172).

Upon comparison, if the hash values do not coincide, the verifier VFR does not transmit a result message to the virtual machine 520 or 530 and outputs an error code (S1173).

Meanwhile, if the result message is transmitted to the server virtual machine 520, the verifier VFR may transmit a list of valid guest virtual machines.

Meanwhile, if the result message is transmitted to the guest virtual machine 530, the verifier VFR may transmit validity of the server virtual machine 520.

Accordingly, the verifier VFR may verify integrity of the server virtual machine 520 and the guest virtual machine 530.

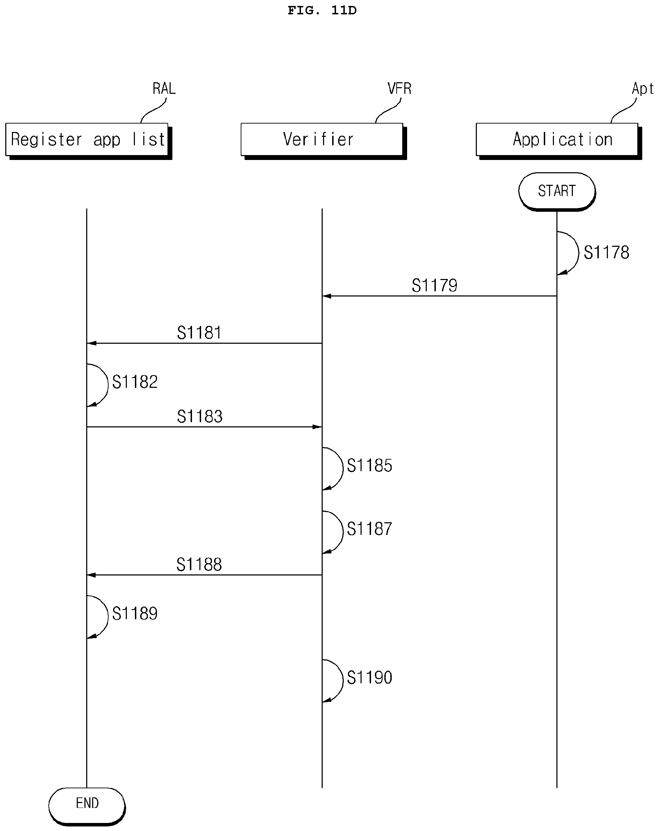

FIG. 11D is a diagram illustrating another example of operation of the verifier VFR.

When an application Apt in the guest virtual machine 530 is executed (S1178), the application Apt transmits an application ID, metadata, and the like to the verifier VFR (S1179).

The verifier VFR receives the application ID, metadata, etc., and may parse the metadata.

Further, the verifier VFR may transmit the application ID to a registered application list RAL (S1181).

The registered application list RAL receives the application ID, and determines whether there is the application ID in the list (S1182).

If there is no application ID in the list, the registered application list RAL notifies a result to the verifier VFR (S1183), and the verifier VFR calculates hash value for the execution file ELF (S1185).

Then, the verifier VFR compares the calculated hash value for the execution file ELF with hash value in the metadata (S1187), and if the hash values coincide, the verifier VFR transmits coincidence information to the registered application list RAL (S1188).

The registered application list RAL adds the application ID to the application list based on the received coincidence information (S1189).

Meanwhile, if the hash values do not coincide in operation 1187 (S1187), the verifier VFR stops data sharing with the application (S1190). Accordingly, all communications and processors with the application are stopped.

Accordingly, the verifier VFR may verify integrity of the executed application.

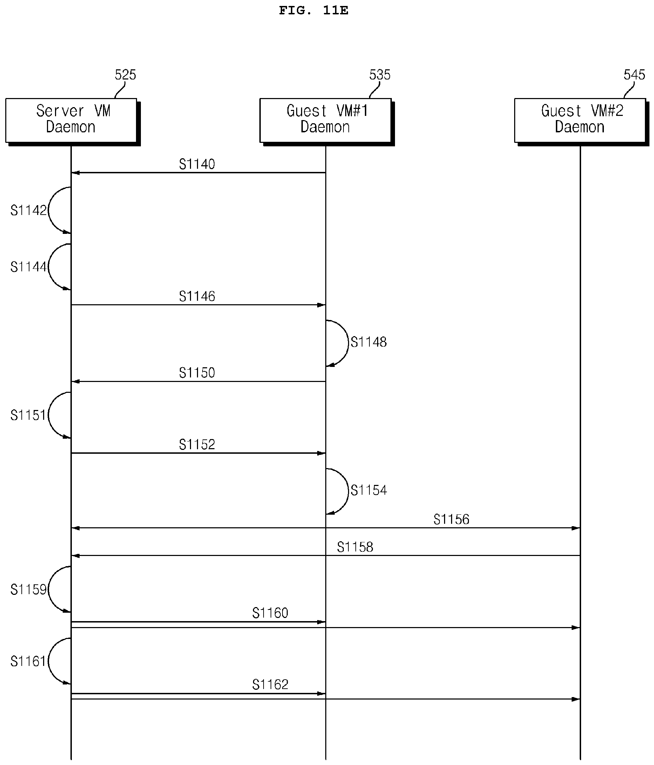

FIG. 11E is a diagram explaining an example of sharing data based on sharing of a symmetric key.

Referring to the figure, the security interface 535 in the first guest virtual machine 530 transmits a request for authentication to the security interface 525 in the server virtual machine 520 (S1140).

Then, the security interface 525 in the server virtual machine 520 verifies certificate validity of the security interface 535 in the first guest virtual machine 530 that has requested authentication (S1142).

Then, the security interface 525 in the server virtual machine 520 encrypts a symmetric key, to be used for sending and receiving encrypted data, with a public key of the security interface 535 in the first guest virtual machine 530 which is a counterpart virtual machine (S1144).

Subsequently, the security interface 525 in the server virtual machine 520 transmits the encrypted symmetric key to the security interface 535 in the first guest virtual machine 530 (S1146).

Next, the security interface 535 in the first guest virtual machine 530 decrypts the symmetric key with its private key to obtain the symmetric key (S1148).

Then, the security interface 535 in the first guest virtual machine 530 transmits a request for data subscription to the security interface 525 in the server virtual machine 520 (S1150).

In response thereto, the security interface 525 in the server virtual machine 520 encrypts the data with the symmetric key (S1151), and transmits the encrypted data to the security interface 535 in the first guest virtual machine 520 (S1152).

Subsequently, the security interface 535 in the first guest virtual machine 530 decrypts the encrypted data with the symmetric key (S1154).

Meanwhile, the security interface 545 in the second guest virtual machine 540 and the security interface 525 in the server virtual machine 520 may request mutual authentication (S1156).

Meanwhile, the security interface 545 in the second guest virtual machine 540 transmits a request for data subscription to the security interface 525 in the server virtual machine 520 (S1158).

In response thereto, the security interface 525 in the server virtual machine 520 encrypts the data with the symmetric key (S1159), and transmits the encrypted data to the security interface 535 in the first guest virtual machine 530 and the security interface 545 in the second guest virtual machine 540 (S1160).

Meanwhile, the security interface 525 in the server virtual machine 520 may generate new symmetric keys as random key values at predetermined intervals.

That is, the security interface 525 in the server virtual machine 520 may update the symmetric key.

Then, the security interface 525 in the server virtual machine 520 transmits the encrypted and updated symmetric key to the security interface 535 in the first guest virtual machine 530 and the security interface 545 in the second guest virtual machine 540 (S1162)

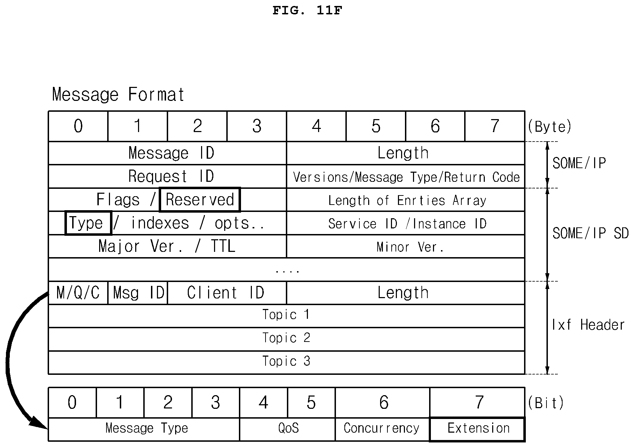

FIG. 11F is a diagram illustrating the format of a message, such as an authentication request or a subscription request of FIG. 11E.

Referring to the figure, the message, such as the authentication request or the subscription request, may include a message ID, a request ID, flag information, reserved information, type information, M/Q/C information in the interface header, and the like.

Meanwhile, the M/Q/C information in the interface header and the like may include an extension bit.

For example, the reserved information of [0x00] indicates Find Server VM, the reserved information of [0x01] indicates Offer Server VM, the reserved information of [0x02] indicates Request capability, and the reserved information of [0x03] indicates Request capability ACK.

Meanwhile, the type information of [0x00] indicates Find Service, the type information of [0x01] indicates Offer Service, the type information of [0x02] indicates Request Service, the type information of [0x03] indicates Request Service ACK, the type information of [0x04] indicates Find EVENT group, the type information of [0x05] indicates Publish Event group, the type information of [0x06] indicates Subscribe Event group, and the type information of [0x07] indicates Subscribe Event group ACK.

Meanwhile, the extension bit of [0x00] indicates only IxF, and the extension bit of [0x01] indicates IxF with SOME/IP.

Meanwhile, the server virtual machine 520 may perform control so that data, shared between the first guest virtual machine 530 and the second guest virtual machine 540, may vary depending on a sharing policy. Accordingly, based on the sharing policy, it is possible to differentiate data to be transmitted.

Meanwhile, in response to the sharing policy being updated, the server virtual machine 520 may set data shared between the first guest virtual machine 530 and the second guest virtual machine 540. Accordingly, data to be transmitted may be set up based on the updating of the sharing policy.

Meanwhile, the server virtual machine 520 may receive position information data, camera data, or sensing data, and may be configured to transmit the position information data to the first guest virtual machine 530 and not be transmitted to the second guest virtual machine 540, based on the shared memory 508 based on the sharing policy. Accordingly, based on the sharing policy, it is possible to differentiate data to be transmitted.

Meanwhile, in response to the sharing policy being updated, the server virtual machine 520 may be configured to transmit the position information data to the first guest virtual machine 530 and the second guest virtual machine 540 based on the shared memory 508. Accordingly, data to be transmitted may be set up based on the updating of the sharing policy.

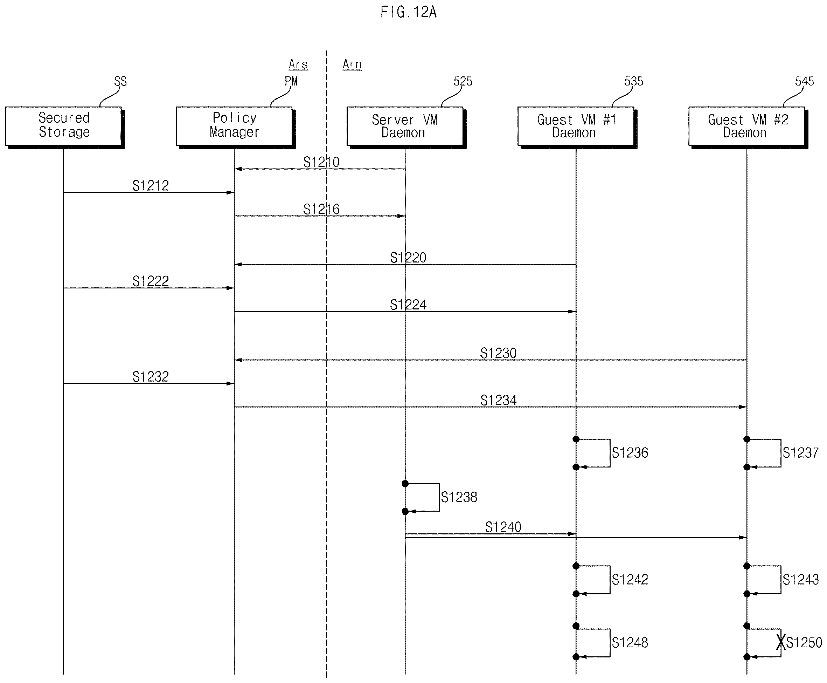

The sharing policy and the updating of the sharing policy will be described below with reference to FIGS. 12A to 12F.

FIG. 12A is a diagram explaining a sharing policy.

Referring to the figure, in Publisher-Subscriber communication, data transmitted by the publisher is transmitted to all subscribers requesting subscription.

Meanwhile, in order to prevent an unallowed application from accessing secured data by subscription, the policy manager PM manages a sharing policy table showing whether applications are accessible to each topic.

The sharing policy table managed by the policy manager PM is transmitted to all the security interfaces 525, 535, and 545 of the respective virtual machines 520, 530, and 540, and the security interfaces 525, 535, and 545 of the respective virtual machines 520, 530, and 540 determine whether to transmit data to applications by referring to the table.

First, the security interfaces 525, 535, and 545 of the respective virtual machines 520, 530, and 540 respectively transmit requests for the sharing policy table to the policy manager PM at the time of initialization (S1210, S1220, and S1230).

For example, in operation 1210 (S1210), the security interface 525 of the server virtual machine 520 transmits a request for the sharing policy table to the policy manager PM at the time of initialization.

In another example, in operation 1220 (S1220), the security interface 535 of the first guest virtual machine 530 transmits a request for the sharing policy table to the policy manager PM at the time of initialization.

In yet another example, in operation 1230 (S1230), the security interface 545 of the second guest virtual machine 540 transmits a request for the sharing policy table to the policy manager PM at the time of initialization.

Then, the policy manager PM reads each sharing policy table from the secured storage device 509 (S1212, S1222, and S1232) for the respective security interfaces.

Then, the policy manager PM transmits the sharing policy table to the security interfaces 525, 535, and 545 of the respective virtual machines 520, 530, and 540 (S1216, S1224, and S1234).

Next, an Augmented Reality (AR) navigation application, running on the first guest virtual machine, subscribes to the position information (S1236).

To this end, the security interface 535 of the first guest virtual machine 530 may transmit a request for subscription to position information to the security interface 525 of the server virtual machine 520.

Subsequently, a Mixed Reality (MR) navigation application, running on the second guest virtual machine 540, subscribes to the position information (S1237).

To this end, the security interface 545 of the second guest virtual machine 540 may transmit a request for subscription to the position information to the security interface 525 of the server virtual machine 520.

Then, the security interface 525 of the server virtual machine 520 publishes the position information (S1238).

To this end, the security interface 525 of the server virtual machine 520 may receive the position information via a position information sensor or a communication module, etc., and may publish the position information.

Meanwhile, the security interface 525 of the server virtual machine 520 may encrypt the position information, and may transmit the encrypted position information data to the security interface 535 of the first guest virtual machine 530 and the security interface 545 of the second guest virtual machine 540 (S1240).

Meanwhile, the security interface 535 of the first guest virtual machine 530 compares the sharing policy tables (S1242), and if the encrypted position information is allowed based on the sharing policy tables, the security interface 535 of the first guest virtual machine 530 decrypts the position information and transmits the decrypted position information to the Augmented Reality (AR) navigation application (S1248).

Meanwhile, the security interface 545 of the second guest virtual machine 540 compares the sharing policy tables (S1242), and if the encrypted position information is not allowed based on the sharing policy tables, the security interface 545 of the second guest virtual machine 540 decrypts the position information, and may not transmit the decrypted position information to the Mixed Reality (MR) navigation application (S1248).

Meanwhile, unlike the drawing, the security interface 525 of the server virtual machine 520 may be configured to transmit the position information data to the security interface 535 of the first guest virtual machine 530 and not be transmitted to the security interface 545 of the second guest virtual machine 540, based on the shared memory 508 based on the sharing policy. Accordingly, based on the sharing policy, it is possible to differentiate data to be transmitted.

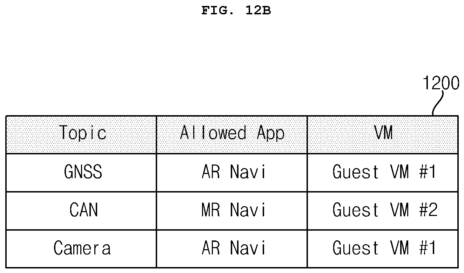

FIG. 12B is a diagram illustrating an example of a sharing policy table 1200.

Referring to the figure, an example is illustrated in which position information GNSS may be used in the AR navigation application and is allowed only for the first guest virtual machine 530.

CAN data CAN, which is sensor data, is used in the MR navigation application and is allowed only for the second guest virtual machine 540.

Camera data Camera is used in the AR navigation application and is allowed only for the first guest virtual machine 530.

For example, the security interface 525 of the server virtual machine 520 may be configured to transmit position information GNSS or the camera data Camera to the security interface 535 of the first guest virtual machine 530, but not be transmitted to the security interface 545 of the second guest virtual machine 540.

In another example, the security interface 525 of the server virtual machine 520 may not be configured to transmit the CAN data CAN to the security interface 535 of the first guest virtual machine 530, but be transmitted to the security interface 545 of the second guest virtual machine 540.

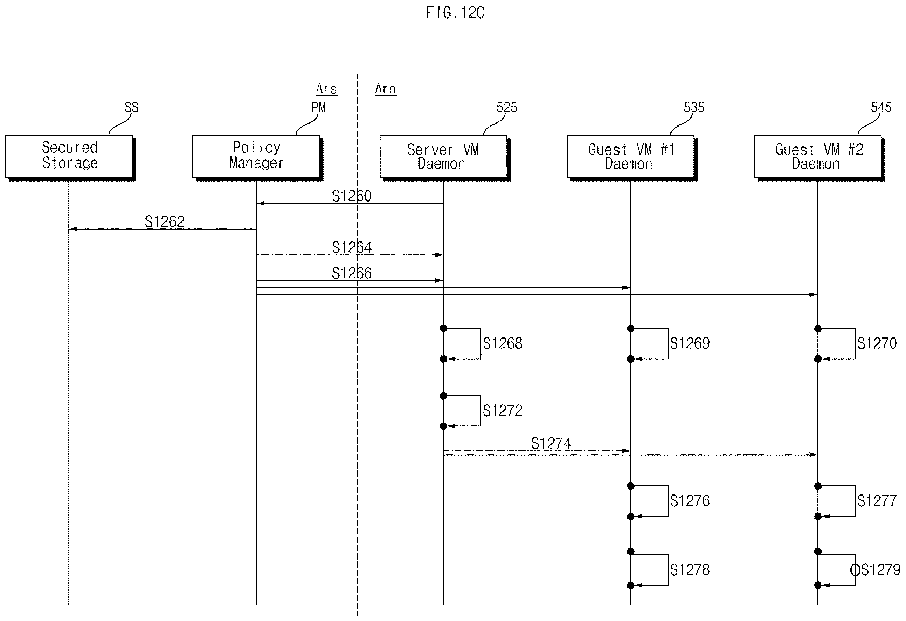

FIG. 12C is a diagram explaining an updated sharing policy.

Referring to the figure, a sharing policy table may be updated at a run time, and if the sharing policy table is updated, the policy manager PM stores the updated table in the secured storage device 509.

The policy manager PM shares the updated table with the security interfaces 525, 535, and 545 of the respective virtual machines 520, 530, and 540 to synchronize sharing policy tables of the entire system.

First, the security interface 525 of the server virtual machine 520 transmits a request for updating the sharing policy table to the policy manager PM (S1260).

In response thereto, the policy manager PM stores an updated sharing policy table in the secured storage device 509 (S1262), and notifies completion of updating the sharing policy table to the security interface 525 of the server virtual machine 520 (S1264).

Then, the policy manager PM transmits the updated sharing policy table to the respective security interfaces 525, 535, and 545 of the respective virtual machines 520, 530, and 540 (S1266).

In response thereto, the security interfaces 525, 535, and 545 of the respective virtual machines 520, 530, and 540 respectively store the updated sharing policy table (S1268, S1269, and S1270).

Meanwhile, in response to the request for subscription to the position information, the security interface 525 of the server virtual machine 520 publishes the position information (S1272).

To this end, the security interface 525 of the server virtual machine 520 may receive the position information via a position information sensor or a communication module, etc. and may publish the position information.

Meanwhile, the security interface 525 of the server virtual machine 520 encrypts the position information and transmits the encrypted position information data to the security interface 535 of the first guest virtual machine 530 and the security interface 545 of the second guest virtual machine 540 (S1274).

Meanwhile, the security interface 535 of the first guest virtual machine 530 compares the sharing policy tables (S1276), and if the encrypted position information is allowed based on the updated sharing policy tables, the security interface 535 of the first guest virtual machine 530 decrypts the position information and transmits the decrypted position information to the AR navigation application (S1278).

Meanwhile, the security interface 545 of the second guest virtual machine 540 compares the sharing policy tables (S1277), and if the encrypted position information is allowed based on the updated sharing policy tables, the security interface 545 of the second guest virtual machine 540 decrypts the position information and transmits the decrypted position information to the MR navigation application (S1279).

Unlike FIG. 12A, the security interface 545 of the second guest virtual machine 540 may also transmit the decrypted position information to the MR navigation application according to the updated sharing policy table.

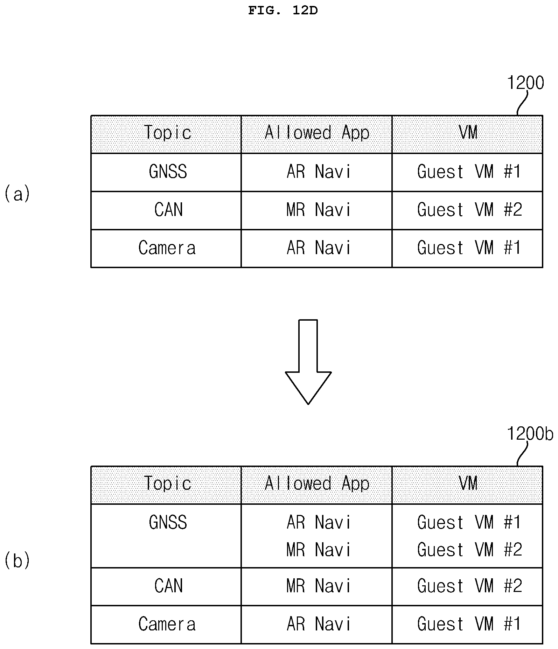

FIG. 12D is a diagram illustrating an example of an updated sharing policy table 1200b.

Referring to the figure, the sharing policy table 1200 shows that, as in FIG. 12A, position information GNSS and camera data Camera are allowed only for the first guest virtual machine 530, and CAN data CAN, which is sensor data, is allowed only for the second guest virtual machine 540.

Meanwhile, the sharing policy table may be updated, and according to the updated sharing policy table 1200b, the position information GNSS is allowed for both the first guest virtual machine 530 and the second guest virtual machine 540, and the CAN data CAN as sensor data is allowed only for the second guest virtual machine 540, and the camera data Camera is allowed only for the first guest virtual machine 530.

Accordingly, the security interface 525 of the server virtual machine 520 may be configured to transmit the position information data to the security interface 535 of the first guest virtual machine 530 and the security interface 545 of the second guest virtual machine 540 based on the shared memory 508 according to the updated sharing policy.

Then, the security interface 535 of the first guest virtual machine 530 and the security interface 545 of the second guest virtual machine 540 may transmit the position information to each of the AR navigation application and the MR navigation application.

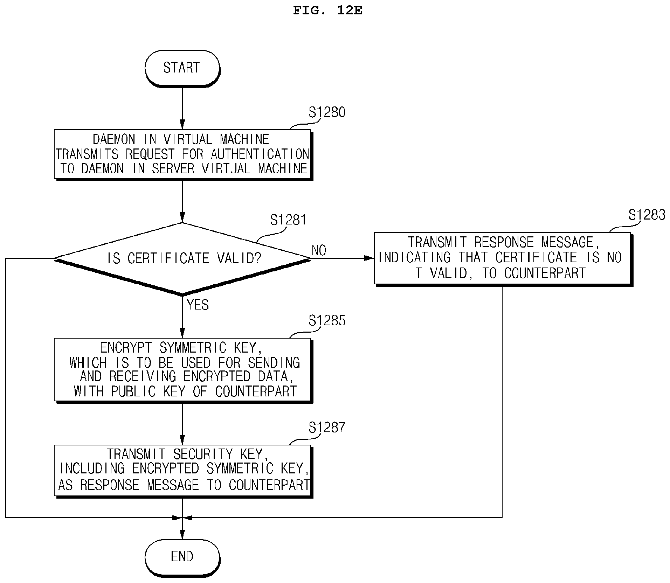

FIG. 12E is a diagram explaining an example of sharing a symmetric key.

Referring to the figure, a security interface in the first guest virtual machine 530 or in the external second signal processing device 170b transmits a request for authentication to the security interface 525 in the server virtual machine 520 (S1280).

In response thereto, the server virtual machine 520 verifies validity of a certificate (S1281).

If the certificate is valid, the server virtual machine 520 encrypts a symmetric key, which is to be used for sending and receiving encrypted data, with a public key of a counterpart (S1285).

Then, the server virtual machine 520 may transmit a security key, including the encrypted symmetric key, as a response message to the first guest virtual machine 530 or the external second signal processing device 170b (S1287).

Meanwhile, if the certificate is not valid in operation 1281 (S1281), the server virtual machine 520 may transmit a response message, indicating that the certificate of the first guest virtual machine 530 or the external second signal processing device 170b is not valid (S1283).

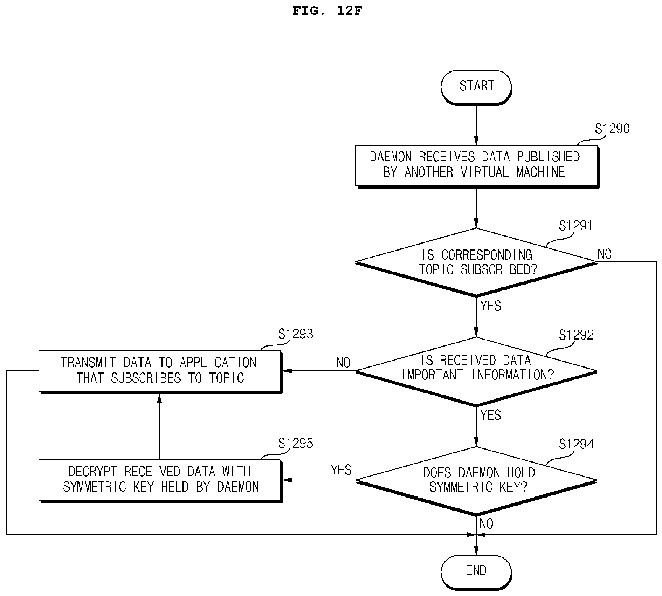

FIG. 12F is a diagram explaining an example of sharing data using a symmetric key.

Referring to FIG. 12F, the first guest virtual machine 530 or the external second signal processing device 170b receives data published by the server virtual machine 520 and the like (S1290).

The first guest virtual machine 530 or the external second signal processing device 170b checks whether a corresponding topic is subscribed (S1291), and if so, checks whether the received data is important information (S1292), and if so, checks whether the first guest virtual machine 530 or the external second signal processing device 170b holds a symmetric key (S1294), and if so, decrypts the received data with the symmetric key held by first guest virtual machine 530 or the external second signal processing device 170b (S1295).

Further, the first guest virtual machine 530 or the external second signal processing device 170b transmits the decrypted data to an application and the like that subscribe to the topic (S1293).

Meanwhile, if the received data does not include important information in operation 1292, the data is not encrypted, such that the data may be directly transmitted to the application and the like that subscribe to the data, without being decrypted.

Accordingly, as illustrated in FIG. 12F, the data received from an external source may be processed, and particularly the same data may be shared with another virtual machine or another signal processing device 170b.

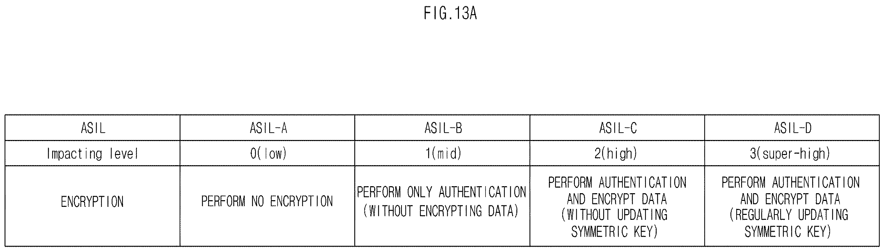

FIG. 13A is a diagram illustrating a relationship between an Automotive Safety Integrity Level (ASIL) and an impacting level.

Referring to the figure, the ASIL is divided into four levels ranging from level A to level D, and impacting levels may range from level 0 to level 3 based on the ASIL.

Meanwhile, the impacting levels may vary depending on a user's setting and the like based on the ASIL.

If the impacting level is level 0, the server virtual machine 520 may not perform authentication and data encryption, and if the impacting level is level 1, the server virtual machine 520 may perform authentication without encrypting data, if the impacting level is level 2, the server virtual machine 520 may perform authentication and encrypt data without updating a security key, and if the impacting level is level 3, the server virtual machine 520 may perform authentication, encrypt data, and regularly update a security key.

Accordingly, security levels of data may be classified based on the ASIL.

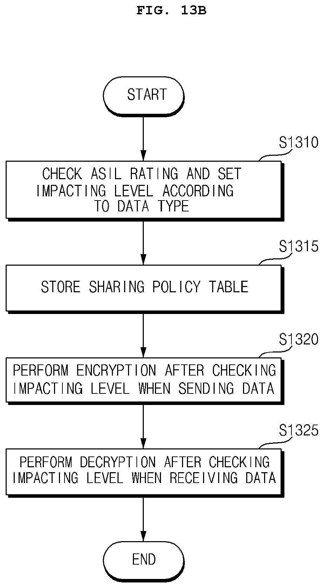

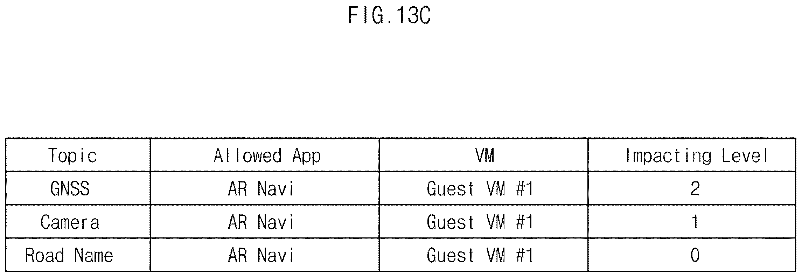

FIG. 13B is a flowchart related to FIG. 13A, and FIG. 13C is a diagram referred to in the description of FIG. 13B.

Referring to the figures, the server virtual machine 520 may set an impacting level according to data type and ASIL ratings (S1310).

Further, the server virtual machine 520 is configured to store a sharing policy table in the secured storage device 509 and the like based on the set impacting level (S1315).

Meanwhile, FIG. 13C is a diagram illustrating an example of a sharing policy table.

FIG. 13C illustrates an example in which an impacting level is level 2 for position information data, an impacting level is level 1 for camera data, and an impacting level is level 0 for street name data.

Then, when sending data, the server virtual machine 520 selectively performs encryption based on the impacting level in the sharing policy table (S1320).

For example, the position information data of FIG. 13C is encrypted, and the camera data is not encrypted.

Next, when receiving data, the guest virtual machine 530 or the second signal processing device 170b checks the impacting level in the sharing policy table and performs decryption (S1325).

For example, the position information data of FIG. 13C is decrypted, and the camera data is not decrypted.

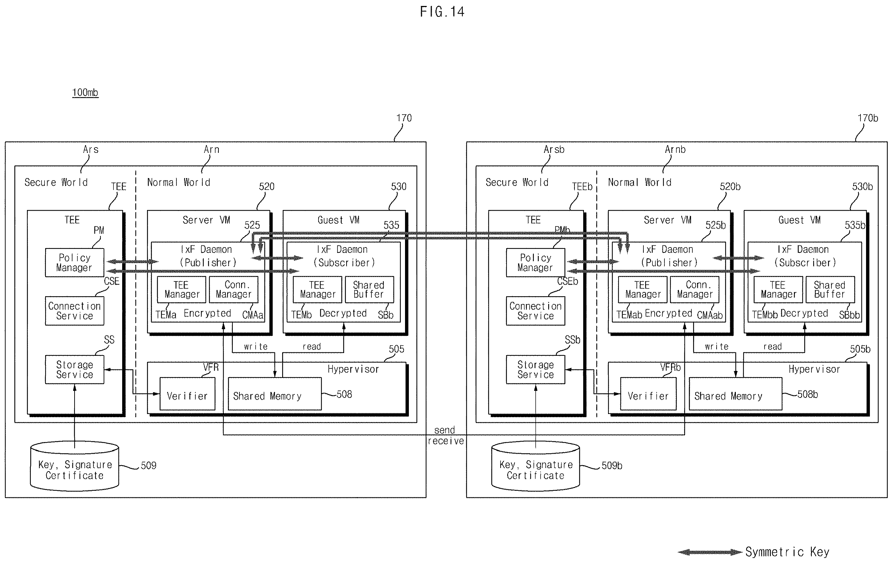

FIG. 14 is an exemplary internal block diagram of a vehicle display apparatus according to an embodiment of the present disclosure.

Referring to the figure, a vehicle display apparatus 100mb according to an embodiment of the present disclosure includes a signal processing device 170 and a second signal processing device 170b.

The signal processing device 170 according to an embodiment of the present disclosure includes a shared memory 508, and a processor 175 configured to perform signal processing for at least one display, wherein the processor 175 is configured to execute a server virtual machine 520 and at least one guest virtual machine 530 on a hypervisor 505 in the processor 175, wherein in response to connection with the second signal processing device 170b on which a second server virtual machine 520 and at least one second guest virtual machine 530b are executed, the server virtual machine 520 is configured to transmit a security key to the second server virtual machine 520. Accordingly, it is possible to increase security during data transmission between a plurality of signal processing devices 170 and 170b in a vehicle.

The signal processing device 170 according to an embodiment of the present disclosure may further include a secured storage device 509.

Similarly to FIG. 10, the signal processing device 170 according to an embodiment of the present disclosure executes the security executor TEE, the server virtual machine 520, the guest virtual machine 530, and the hypervisor 505.

The verifier VFR may be executed in the hypervisor 505; the interface SS, the policy manager PM, and the connection service CSE may be executed in the security executor TEE; the security interface 525, the security manager TEma, and the connection manager CMAa may be executed in the server virtual machine 520; and the security interface 535, the security manager TEmb, and the shared buffer SBa may be executed in the guest virtual machine 530.

The connection service CSE performs communication with the connection manager CMAa, and the connection manager CMAa serves as a proxy.

Meanwhile, the connection service CSE may manage a session ID when the second signal processing device 170b is connected.

The second signal processing device 170b according to an embodiment of the present disclosure may further include a secured storage device 509b.

Similarly to FIG. 10, the second signal processing device 170b according to an embodiment of the present disclosure executes a security executor TEEb, a second server virtual machine 520b, a second guest virtual machine 530b, and a hypervisor 505b.

A verifier VFRb may be executed in a hypervisor 505b; an interface SSb, a policy manager PMb, and a connection service CSb may be executed in the security executor TEEb; a security interface 525b, a security manager TEmab, and a connection manager CMAab may be executed in the server virtual machine 520b; and a security interface 535b, a security manager TEmbb, and a shared buffer SBbb may be executed in the guest virtual machine 530b.

Meanwhile, the security interface 525 of the server virtual machine 520 in the signal processing device 170 may share a symmetric key with the security interface 525b of the second server virtual machine 520b in the second signal processing device 170b.

Meanwhile, the policy manager PM in the signal processing device 170 may provide a management policy to the second signal processing device 170b, and the second signal processing device 170b transmits the received management policy to the policy manager PMb, and the policy manager PMb shares the management policy with the respective virtual machines 520m and 530b, thereby receiving a topic based on the shared management policy.

Meanwhile, the server virtual machine 520 may transmit a certificate together when transmitting the security key to the second server virtual machine 520. Accordingly, it is possible to increase security during data transmission between a plurality of signal processing devices 170 and 170b in a vehicle.

Meanwhile, the server virtual machine 520 may be configured to store data, which is to be shared with the second signal processing device 170b, in the shared memory 508. Accordingly, it is possible to increase security during data transmission between a plurality of signal processing devices 170 and 170b in a vehicle.

Meanwhile, the server virtual machine 520 may selectively encrypt the data to be shared with the second signal processing device 170b based on impacting levels according to a data type and ASIL ratings, and may be configured to store the encrypted data the shared memory 508. Accordingly, levels of security between the plurality of signal processing devices 170 and 170b in a vehicle may be classified based on the ASIL.

In response to the impacting level being level 1, the server virtual machine 520 may perform authentication without encrypting data, in response to the impacting level being level 2, the server virtual machine 520 may perform authentication and encrypt data without updating a security key, and in response to the impacting level being level 3, the server virtual machine 520 may perform authentication, encrypt data, and update a security key. Accordingly, levels of security between the plurality of signal processing devices 170 and 170b in a vehicle may be classified based on the ASIL.

Meanwhile, the server virtual machine 520 may receive a second certificate from the second signal processing device 170b, and the verifier VFR in the hypervisor 505 may verify the second certificate. If the second certificate is verified, the server virtual machine 520 may control the security key to be transmitted to the second server virtual machine 520. Accordingly, it is possible to increase security during data transmission between a plurality of signal processing devices 170 and 170b in a vehicle.

Meanwhile, if the second certificate is verified, the server virtual machine 520 may encrypt a symmetric key and may transmit a security key, including the encrypted symmetric key, to the second server virtual machine 520. Accordingly, it is possible to increase security during data transmission between a plurality of signal processing devices 170 and 170b in a vehicle.

Meanwhile, when encrypting the symmetric key, the server virtual machine 520 may encrypt the symmetric key based on a public key of the second signal processing device 170b. Accordingly, it is possible to increase security during data transmission between a plurality of signal processing devices 170 and 170b in a vehicle.

Meanwhile, the processor 175 may execute the security executor TEE including the public manager PM, and the public manager PM may transmit a sharing policy or a topic based on the sharing policy to the server virtual machine 520, and the server virtual machine 520 may transmit the sharing policy or the topic based on the sharing policy to the second server virtual machine 520. Accordingly, it is possible to increase security during data transmission between a plurality of signal processing devices 170 and 170b in a vehicle.

Meanwhile, the processor 175 may execute the security executor TEE including the public manager PM, and the server virtual machine 520 may receive a policy table from the second server virtual machine 520, and the policy manager PM may update the policy table, and the server virtual machine 520 may transmit the updated policy table to the second server virtual machine 520. Accordingly, it is possible to increase security during data transmission between a plurality of signal processing devices 170 and 170b in a vehicle.

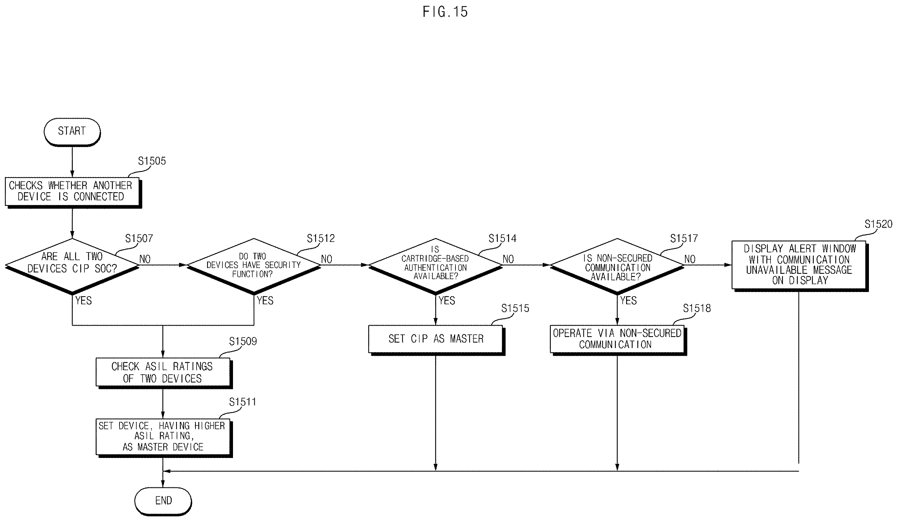

FIGS. 15 to 16C are diagrams referred to in the description of FIG. 14.

FIG. 15 is a diagram illustrating an example of selecting a master signal processing device from among a plurality of signal processing devices.

Referring to the drawing, the signal processing device 170 checks whether the second signal processing device 170b is connected (S1505).

If the second signal processing device 170b is connected, the signal processing device 170 determines whether the second server virtual machine 520 is executed in the second signal processing device 170b (S1507), and if the second server virtual machine 520 is executed, the signal processing device 170 checks the ASIL ratings (S1509).

Further, the signal processing device 170 may set the signal processing device 170 as the master signal processing device 170 and the second signal processing device 170b as the slave signal processing device 170 based on the ASIL ratings (S1511). Accordingly, it is possible to increase security during data transmission between a plurality of signal processing devices 170 and 170b in a vehicle.

Meanwhile, if the second server virtual machine 520 is not executed in the second signal processing device 170b in operation 1507 (S1507), the signal processing device 170 determines whether authentication or encryption is supported (S1512).

If the authentication or encryption is supported, the signal processing device 170 may set the signal processing device 170 as the master signal processing device 170 and the second signal processing device 170b as the slave signal processing device 170 based on the ASIL ratings.

Meanwhile, if the authentication or encryption is not supported in the second signal processing device 170b in operation 1512 (S1512), the signal processing device 170 determines whether the second signal processing device 170b is a cartridge-based signal processing device (S1514), and if so, the signal processing device 170 may set the signal processing device 170 as the master signal processing device 170 and the second signal processing device 170b as the slave signal processing device 170 (S1515).

Meanwhile, if the second signal processing device 170b is not a cartridge-based signal processing device in operation 1514 (S1514), the signal processing device 170 determines whether non-secured communication is available (S1517), and if so, the signal processing device 170 operates via non-secured communication (S1518).

Meanwhile, if non-secured communication is not available in operation 1517 (S1517), the signal processing device outputs a communication unavailable message (S1520).

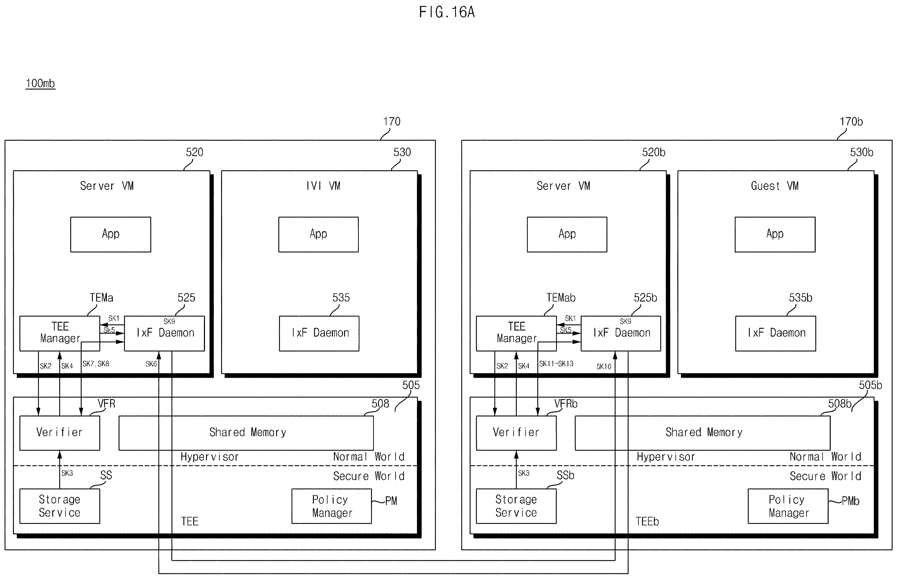

FIG. 16A is a diagram explaining an example of sharing a symmetric key between a plurality of signal processing devices 170 and 170b.

Referring to the drawing, the security interfaces 535 and 535b of the server virtual machines 520 and 520b in the respective signal processing devices 170 and 170b request their certificates from the security managers TEma and TEMb (SK1).

The security managers TEma and TEMb of the server virtual machines 520 and 520b in the respective signal processing devices 170 and 170b request the corresponding certificates from the verifiers VFR and VFRb (SK2).

The verifiers VFR and VFRb in the respective signal processing devices 170 and 170b import the corresponding certificates from the secured storage device 509 in a secure domain (SK3).

The verifiers VFR and VFRb in the respective signal processing devices 170 and 170b transmit the corresponding certificates to the security managers TEma and TEMb (SK4).

The security managers TEma and TEMab in the respective signal processing devices 170 and 170b transmit the corresponding certificates to the security interfaces 525 and 525b (SK5).

If the master signal processing device 170 is connected in the slave signal processing device 170b, the slave signal processing device 170b transmits its certificate to the master signal processing device 170 (SK6).

The master signal processing device 170 requests the verifier VFR to verify the received certificate of the slave signal processing device (SK7).

The verifier VFR in the master signal processing device 170 verifies the certificate of the slave signal processing device 170b and transmits a result of the verification to the security interface 525 (SK8).

If the certificate of the slave signal processing device 170b is verified in the master signal processing device 170, the security interface 525 encrypts a symmetric key with a public key of the slave signal processing device 170b (SK9).

The master signal processing device 170 transmits its certificate and the encrypted symmetric key to the slave signal processing device 170b (SK10).

The slave signal processing device 170b requests the verifier VFRb to verify the received certificate of the master signal processing device 170 (SK11).

The verifier VFRb in the slave signal processing device 170b verifies the certificate of the master signal processing device 170 and transmits a result of the verification to the security interface 525b (SK12).

If the certificate of the master signal processing device is verified, the security interface 525b in the slave signal processing device 170b requests the verifier VFRb to decrypt the encrypted symmetric key (SK13).

The verifier VFRb in the slave signal processing device 170b decrypts the symmetric key and stores the decrypted symmetric key in the secure domain via the secured storage device 509b (SK14).

Then, by encrypting and decrypting secured data with the shared symmetric key, the data may be safely transmitted (SK15).

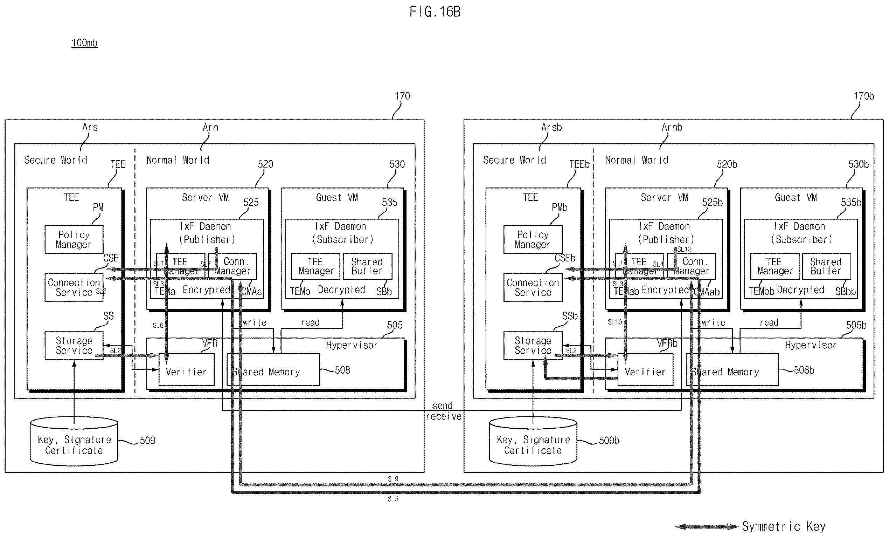

FIG. 16B is a diagram explaining mutual verification between a plurality of signal processing devices 170 and 170b and sharing of a symmetric key therebetween.

Referring to FIG. 16B, the server virtual machines 520 and 520b in the respective signal processing devices 170 and 170b request corresponding certificates from the verifiers VFR and VFRb via the security managers TEma and TEmab (SL1).

The verifiers VFR and VFRb in the respective signal processing devices 170 and 170b import the corresponding certificates from the secured storage devices 509 and 509b in a secure domain (SL2).

The security managers TEma and TEmab in the respective signal processing devices 170 and 170b transmit the corresponding certificates, received from the verifiers VFR and VFRb, to the security interfaces 525 and 525b (SL3).

Once the slave signal processing device is connected, the security interface 525 notifies the connection service CSE that an external device is connected (SL4).

A connection service CSEb transmits its certificate to the master signal processing device 170 via the connection manager CMAab (SL5).

Upon verifying the transmitted certificate using the verifier VFRR, the master signal processing device 170 transmits a result of the verification to the security interface 525 of the server virtual machine 520 (SL6).

The security interface 525 of the server virtual machine 520 notifies the connection service CSE that the certificate from the slave signal processing device 170b is valid (SL7).

The connection service CSE assigns a session ID for the corresponding connection (SL8).

The connection service CSE transmits the symmetric key, encrypted with the public key of the slave signal processing device 170, its certificate, and the session ID via the connection manager CMAa (SL9).

The second signal processing device 170b verifies the transmitted certificate of the master signal processing device 170 based on the verifier VFRb and transmits a result of the verification to the security interface 525 of the server virtual machine 520 (SL10).

The security interface 525b decrypts the symmetric key and stores the decrypted symmetric key in a secure domain via the secured storage device 509b (SL11).

The security interface 525b provides the session ID for the connection to the connection service CSEb, and the connection service CSEb stores the session ID (SL12).

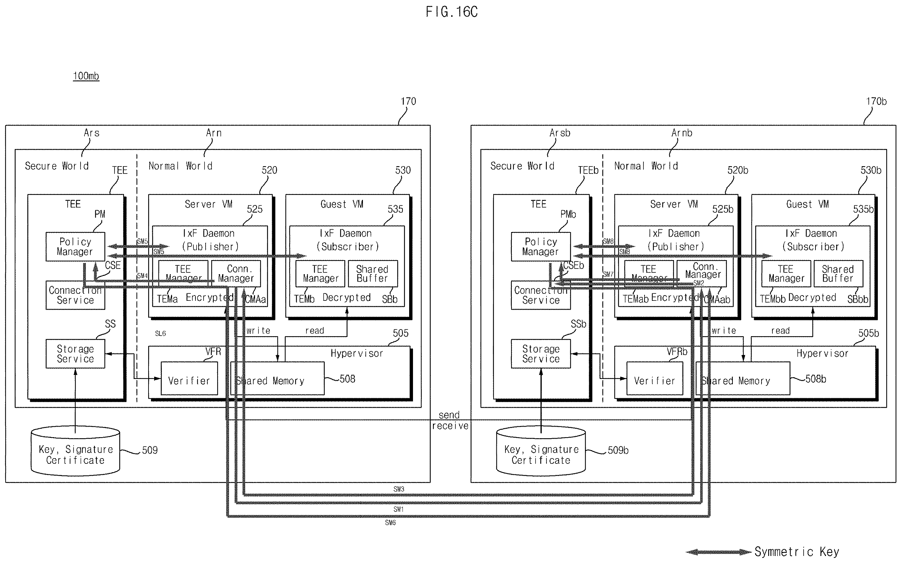

FIG. 16C is a diagram explaining an example of updating a policy table between a plurality of signal processing devices 170 and 170b.

Referring to the drawing, once the master signal processing device 170 and the slave signal processing device 170b are determined, the master signal processing device 170 transmits a request for a policy table to the server virtual machine 520b of the slave signal processing device 170b (SM1).

The connection manager CMAab of the slave signal processing device 170b transmits a request for a policy table to the connection service CSEb (SM2).

The connection manager CMAab imports a policy table from the policy manager PMb and sends the policy table to the master signal processing device 170 via the connection manger CMAab (SM3).

The connection manager CMAa of the master signal processing device 170 sends the policy table to the connection service CSE, and the connection service CSE sends the policy table to the policy manager PM (SM4).

The server virtual machine 520 of the master signal processing device 170 updates the policy table and sends the updated policy table to each virtual machine (SM5).

The connection manager CMAa provides the updated policy table from the policy manger PM to the server virtual machine 520b of the slave signal processing device 170b via the connection manager CMAa (SM6).

The connection manager CMAab of the slave signal processing device 170b sends the latest policy table received from the connection service CSEb, and the connection service CSEb sends the policy table to the policy manager PMb (SM7) .

The policy manager PMb of the slave signal processing device 170 shares a management policy with each virtual machine (SM8).

Then, by encrypting and decrypting secured data using the shared symmetric key based on the policy table, the data may be safely transmitted or received (SM9).

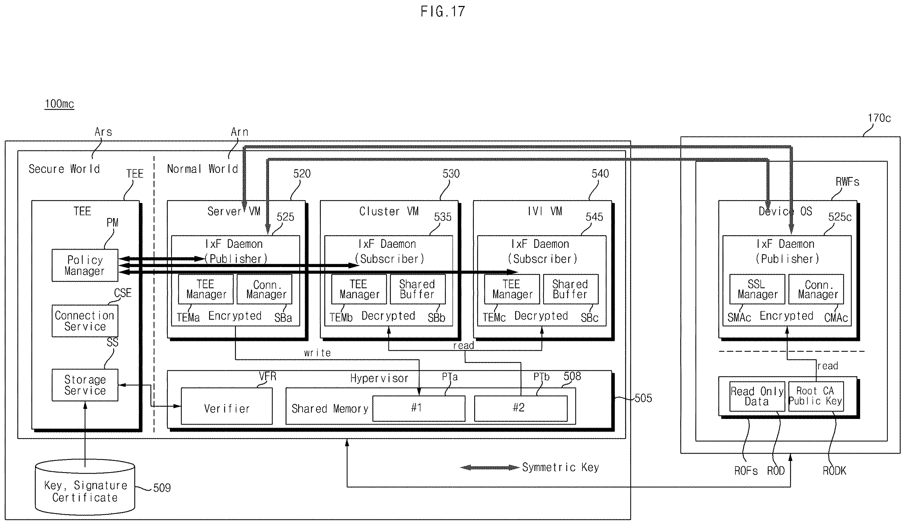

FIG. 17 is an exemplary block diagram of a vehicle display apparatus according to another embodiment of the present disclosure.

Referring to FIG. 17, a vehicle display apparatus 100mc according to another embodiment of the present disclosure includes a signal processing device 170 and a cartridge-based second signal processing device 170c.

The signal processing device 170 according to another embodiment of the present disclosure includes a shared memory 508 and a processor 175 configured to perform signal processing for at least one display, wherein the processor 175 is configured to execute a server virtual machine 520 and at least one guest virtual machine 530 on a hypervisor 505 in the processor 175, wherein in response to connection with the cartridge-based second signal processing device 170c, the server virtual machine 520 is configured to transmit a security key to a security interface 585 in the second signal processing device 170c. Accordingly, it is possible to increase security during data transmission between a plurality of signal processing devices 170 and 170b in a vehicle.

The signal processing device 170 according to another embodiment of the present disclosure may further include a secured storage device 509.

Similarly to FIG. 10, the signal processing device 170 according to another embodiment of the present disclosure executes a security executor TEE, a server virtual machine 520, a guest virtual machine 530, and a hypervisor 505.

The verifier VFR may be executed in the hypervisor 505; an interface SS, a policy manager PM, and a connection service CSE may be executed in the security executor TEE; a security interface 525, a security manager TEma, and a connection manager CMAa may be executed in the server virtual machine 520; and a security interface 535, a security manager TEmb, and a shared buffer SBb may be executed in the guest virtual machine 530.

The connection service CSE performs communication with the connection manager CMAa, and the connection manager CMAa serves as a proxy.

Meanwhile, the connection service CSE may manage a session ID for connection of the cartridge-based second signal processing device 170c.

Meanwhile, the server virtual machine 520 may transmit the certificate together when transmitting the security key to the security interface 585 in the cartridge-based second signal processing device 170c. Accordingly, it is possible to increase security during data transmission between a plurality of signal processing devices 170 and 170c in a vehicle.

Meanwhile, the server virtual machine 520 may be configured to store data, which is to be shared with the cartridge-based second signal processing device 170c, in the shared memory 508. Accordingly, it is possible to increase security during data transmission between a plurality of signal processing devices 170 and 170c in a vehicle.

Meanwhile, the server virtual machine 520 may selectively encrypt the data to be shared with the cartridge-based second signal processing device 170c based on impacting levels according to a data type and ASIL ratings, and may be configured to store the encrypted data in the shared memory 508. Accordingly, levels of security between the plurality of signal processing devices 170 and 170c in a vehicle may be classified based on the ASIL.

Meanwhile, the server virtual machine 520 may receive a second certificate from the cartridge-based second signal processing device 170c, and the verifier VFR in the hypervisor 505 may verify the second certificate. If the second certificate is verified, the server virtual machine 520 may be configured to transmit a security key to the security interface 585 in the second signal processing device 170c. Accordingly, it is possible to increase security during data transmission between a plurality of signal processing devices 170 and 170c in a vehicle.

The cartridge-based second signal processing device 170c according to another embodiment of the present disclosure has no secure domain, and executes Read Only Filesystem (ROFS) and Read Write Filesystem (RWFS).

The Read Write Filesystem (RWFS) may execute the security interface 525c, and the security interface 525c may execute an SSL manager (SMAc) and a connection manager (CMAc) .

The Read Only Filesystem (ROFS) may store Read Only Data (ROD) and a certificate authority public key (ROFK).

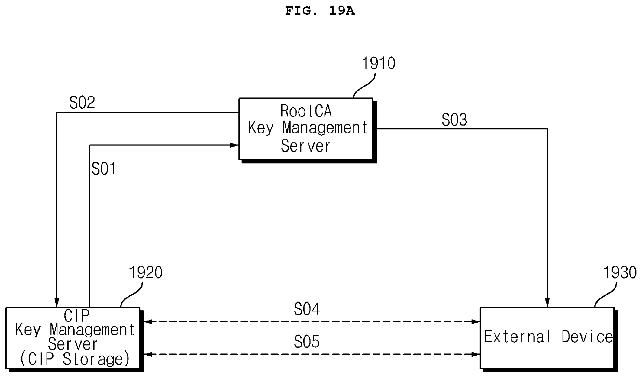

Meanwhile, the cartridge-based second signal processing device 170c has no secure domain, and thus, may receive a public key from a certificate authority server (RootCA Key Management Server) 1910 (see FIG. 19A) and stores and manages the received public key in the Read Only Filesystem (ROFS).

The signal processing device 170 and the cartridge-based second signal processing device 170c may perform authentication by mutually sending and receiving the certificate and public key.

The cartridge-based second signal processing device 170c may read a public key from the Read Only Filesystem (ROFS) and send the public key to the signal processing device 170, and the signal processing device 170 may perform authentication based on a certificate and the received public key.

The cartridge-based second signal processing device 170c may confirm authentication using a shared certificate received from the signal processing device 170 and the public key.

Meanwhile, the cartridge-based second signal processing device 170c, having no public key, fails in authentication, and thus is not connected to the signal processing device 170.

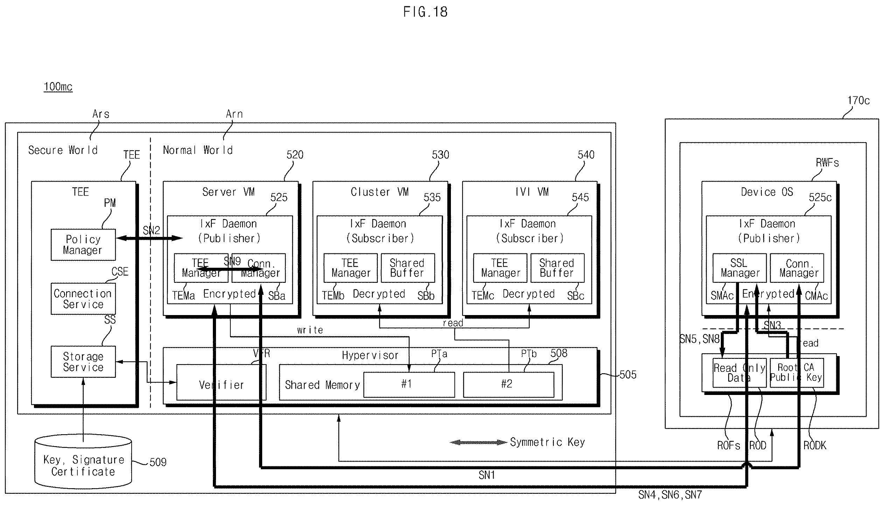

FIGS. 18 to 19B are diagrams referred to in the description of FIG. 17.

FIG. 18 is a diagram explaining mutual verification between a plurality of signal processing devices 170 and 170c of FIG. 17 and sharing of a symmetric key therebetween.

Referring to FIG. 18, the signal processing device 170 and the cartridge-based second signal processing device 170c are connected (SN1). The cartridge-based second signal processing device 170c may be, for example, a USB device, a network device, and the like.

The verifier VFR in the signal processing device 170 imports a certificate from the secured storage device 509 in the secure domain (SN2).

The cartridge-based second signal processing device 170c reads a public key of the certificate authority server (RootCA Key Management Server) 1910 (see FIG. 19A) from the Read Only filesystem (ROFS) (SN3).

The cartridge-based second signal processing device 170c sends the public key of the certificate authority server (RootCA Key Management Server) 1910 (see FIG. 19A) to the signal processing device 170, and the signal processing device 170 sends a certificate to the cartridge-based second signal processing device 170c (SN4).

The cartridge-based second signal processing device 170c obtains the public key by decrypting the public key, received from the signal processing device 170, using a secure socket layer manager (SMAc), and then, stores the obtained public key in the Read Only filesystem (ROFS) (SN5).

The signal processing device 170 encrypts a seed for generating a symmetric key, a send time, and lifetime by importing a private key of the signal processing device 170 from the secured storage device 509 in the secure domain, and sends the encrypted data to the cartridge-based second signal processing device 170c (SN6).

The cartridge-based second signal processing device 170 receives the encrypted data from the signal processing device 170 and decrypts the encrypted data with the public key of the signal processing device 170 using the secure socket layer manager (SMAc), and then generates a symmetric key and sends the encrypted data using the generated symmetric key (SN7).

If a symmetric key lifetime expires, the secure socket layer manager (SMAc) regenerates the symmetric key based on a point of time when the symmetric key lifetime expires, and a seed value stored in the Read Only filesystem (ROFS) (SN8).

If the symmetric key lifetime expires in the signal processing device 170, the verifier VFR regenerates the symmetric key by receiving information from the secured storage device 509 in the secure domain (SN9).

FIG. 19A is a diagram explaining an example of applying security to the cartridge-based second signal processing device 170c.

Referring to FIG. 19A, the certificate authority server (RootCA Key Management Server) 1910, a key management server 1920 in the signal processing device 170, and a cartridge-based second signal processing device 1930 may each perform communication.

First, the certificate authority server (RootCA Key Management Server) 1910 receives a public key from the key management server 1920 in the signal processing device 170 (S01), and encrypts the received public key with its private key and issues a certificate to the key management server 1920 in the signal processing device 170 (S02).

An external device 1930 that is authenticated by the certificate authority server (RootCA Key Management Server) 1910 receives a public key of the certificate authority server (RootCA Key Management Server) 1910 for communication with the signal processing device 170 (S03).

Then, if the cartridge-based second signal processing device 1930 is connected, the key management server 1920 in the signal processing device 170 performs authentication using the certificate and the public key (S04), and if authentication is complete, the key management server 1920 shares the encrypted data with the cartridge-based second signal processing device 1930 (S05).

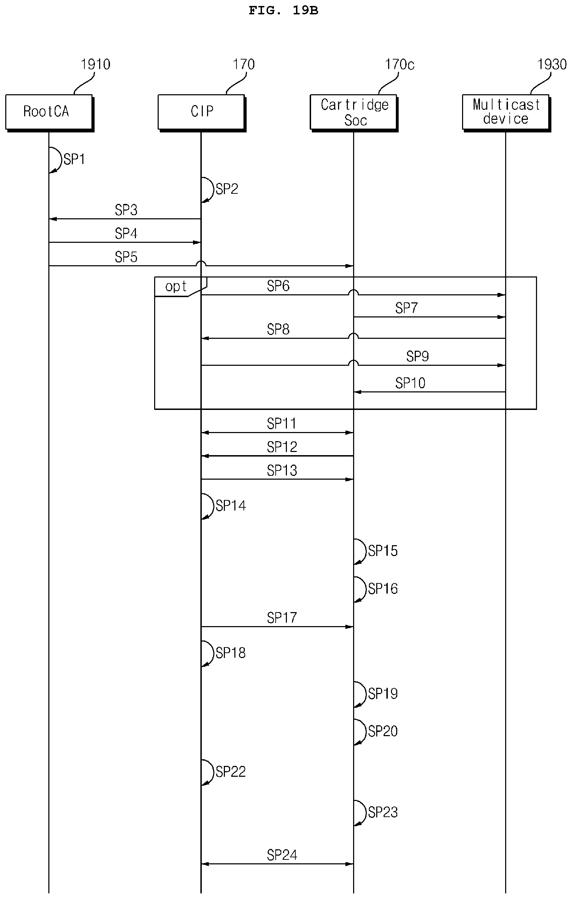

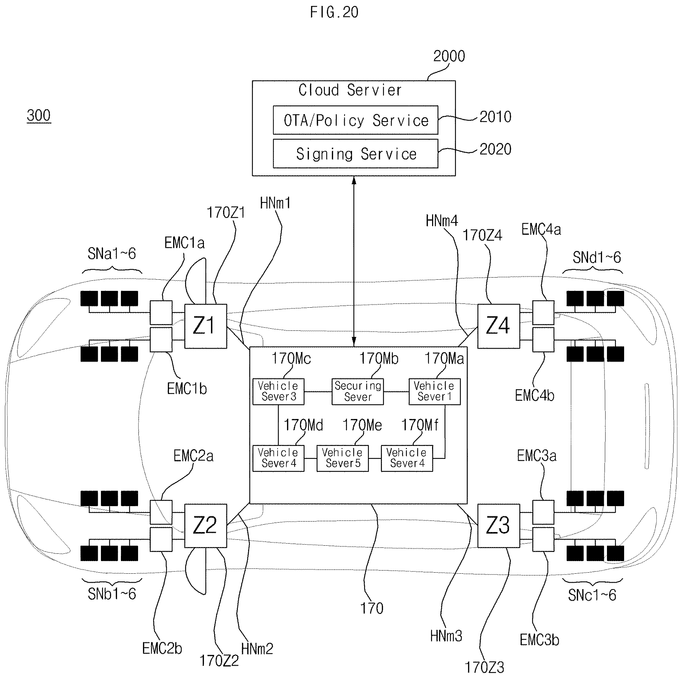

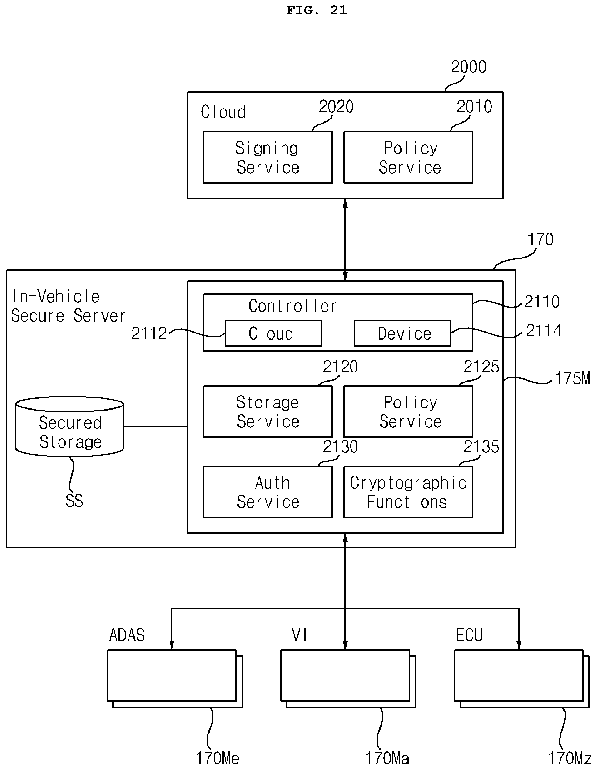

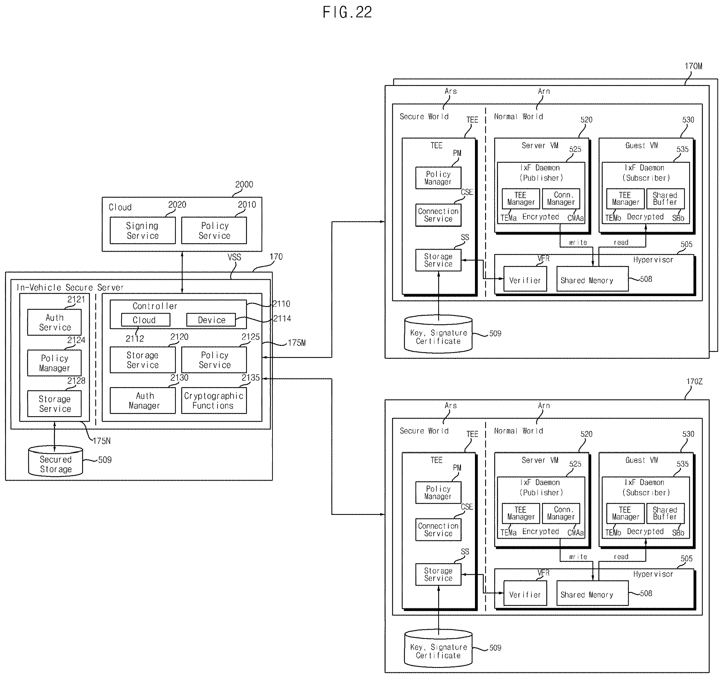

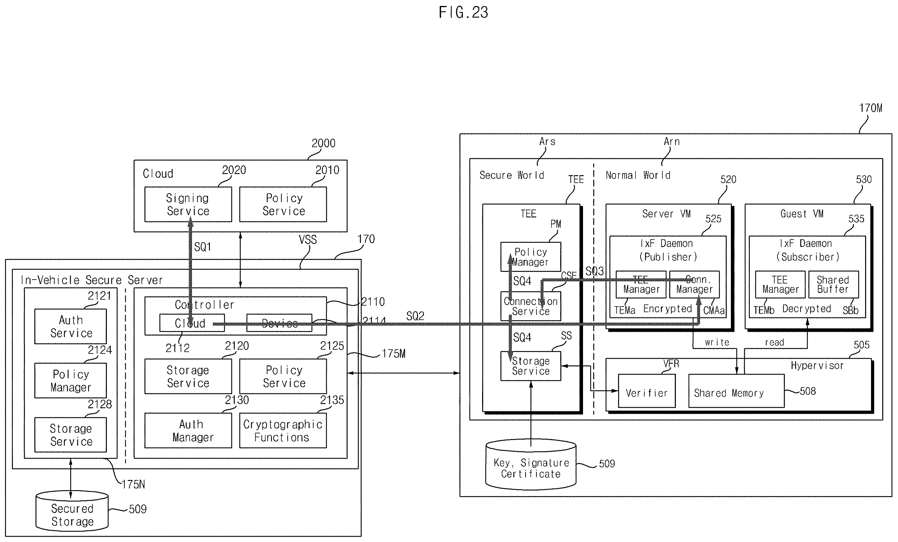

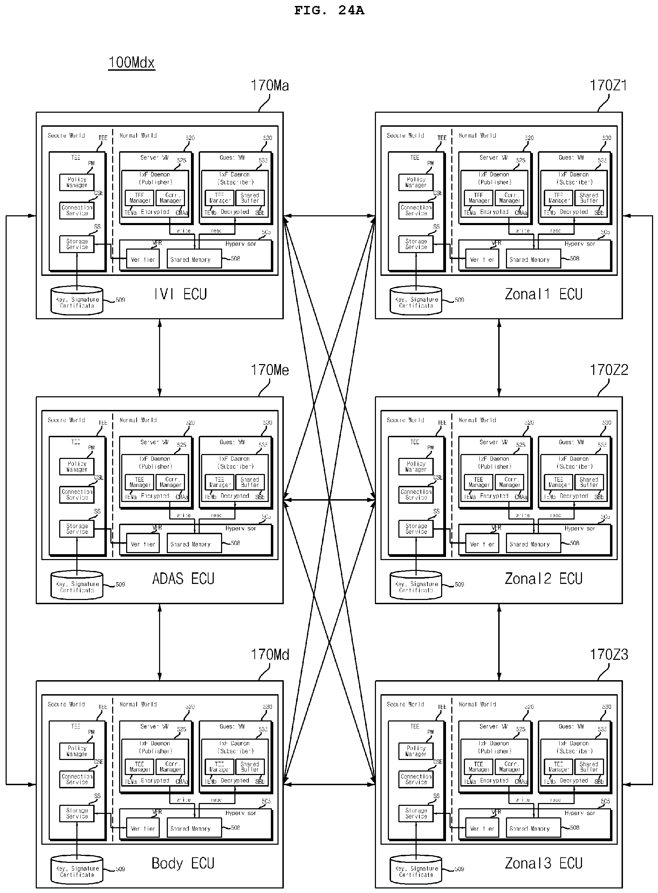

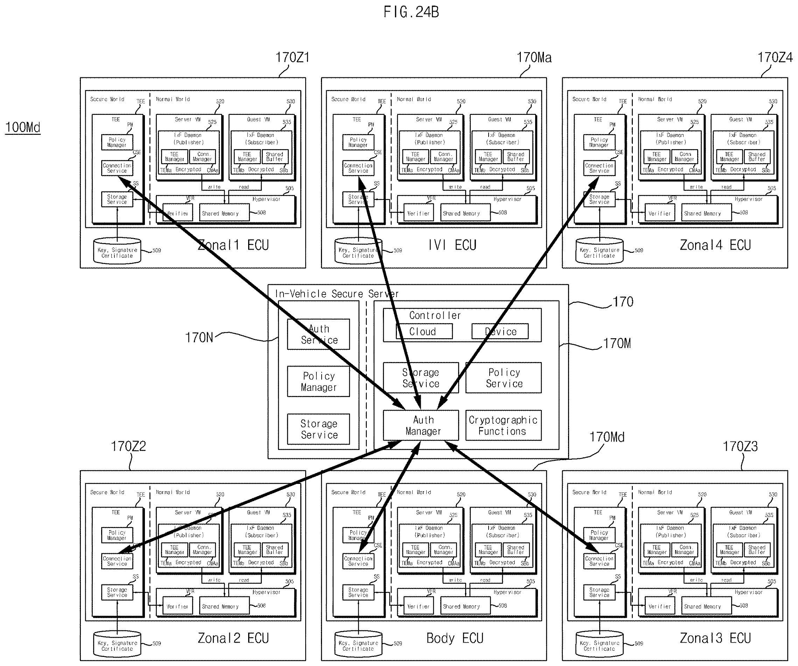

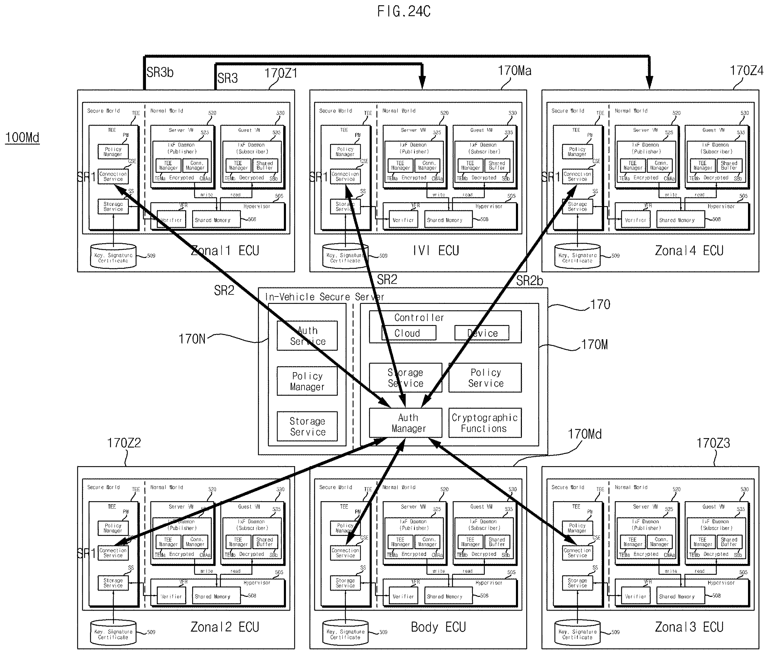

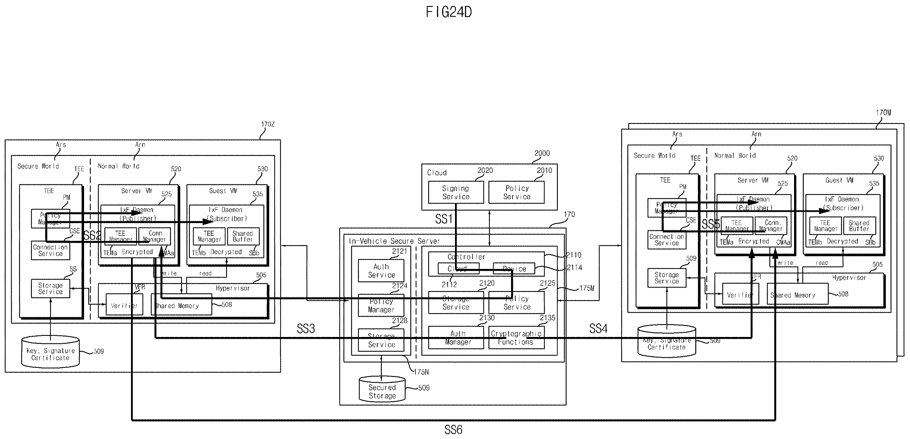

FIG. 19B is a diagram explaining an example of applying security to the cartridge-based second signal processing device 170c.

Referring to FIG. 19B, the certificate authority server (RootCA Key Management Server) 1910 generates a private key or a public key (SP1).

Then, the signal processing device 170 generates an internal private key or public key (SP2).

Subsequently, the signal processing device 170 sends the public key to the certificate authority server (RootCA Key Management Server) 1910 (SP3).

Next, the certificate authority server (RootCA Key Management Server) 1910 generates a certificate of the signal processing device 170 based on its private key and the public key of the signal processing device 170, and sends the generated certificate to the signal processing device 170 (SP4) .

Then, the certificate authority server (RootCA Key Management Server) 1910 sends the public key of the certificate authority server (RootCA Key Management Server) 1910 to the cartridge-based second signal processing device 170c (SP5).

Meanwhile, the signal processing device 170 and the cartridge-based second signal processing device 170c do not know each other's IPs, the signal processing device 170 connects to a multicast channel 1930 (SP6).

The cartridge-based second signal processing device 170c connects to the multicast channel 1930 (SP7).

Meanwhile, the multicast channel 1930 searches for a responder by broadcasting Rest API (SP8).

The signal processing device 170 checks an accessible device, and is responsive to the multicast channel 1930 (SP9).

The multicast channel 1930 sends information of the signal processing device 170, which responded, to the cartridge-based second signal processing device 170c (SP10).

The signal processing device 170 and the cartridge-based signal processing device 170c are connected through network connection (SP11).

The cartridge-based second signal processing device 170c sends the public key of the certificate authority server (RootCA Key Management Server) 1910 to the signal processing device 170 (SP12).

Meanwhile, the signal processing device 170 sends the certificate to the cartridge-based second signal processing device 170c (SP13).

Meanwhile, the signal processing device 170 decrypts its certificate with the public key of the certificate authority server (RootCA Key Management Server) 1910, and verifies the public key of the cartridge-based second signal processing device 170c (SP14).

The cartridge-based second signal processing device 170c decrypts the certificate received from the signal processing device 170 (SP15).

Further, the cartridge-based second signal processing device 170c obtains a public key of the signal processing device 170 (SP16).

Meanwhile, based on the private key of the signal processing device 170, the signal processing device 170 may transmit a seed for generating a hash key, a send time, and lifetime (SP17).

Meanwhile, the signal processing device 170 generates a hash key to be used as a symmetric key (SP18).

The cartridge-based second signal processing device 170c decrypts the received data using the public key of the signal processing device 170 which is obtained by decrypting the certificate of the signal processing device 170 (SP19).

Then, the cartridge-based second signal processing device 170c generates a hash key to be used as a symmetric key, based on the seed of the signal processing device 170 and the send time and lifetime (SP20).

Next, the cartridge-based second signal processing device 170c sends the generated hash key to the signal processing device 170 (SP21).

After a predetermined period of time elapses, the signal processing device 170 destroys the used hash key, and generates a new hash key which is new at the present time (SP22).

Likewise, the cartridge-based second signal processing device 170c generates the hash key at a scheduled time (SP23).

Then, the signal processing device 170 and the second signal processing device 170c share data encrypted with a changed symmetric key (SP24).

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device configured to output an image to a vehicle display, the signal processing device comprising:
a shared memory; and
a processor configured to perform signal processing for at least one display,
wherein the processor is configured to execute a server virtual machine and at least one guest virtual machine on a hypervisor in the processor,
wherein in response to connection with a second signal processing device on which a second server virtual machine and at least one second guest virtual machine are executed, the server virtual machine is configured to transmit a security key to the second server virtual machine.

2. The signal processing device of claim 1, wherein the server virtual machine is configured to transmit a certificate together when transmitting the security key to the second server virtual machine.

3. The signal processing device of claim 1, wherein the server virtual machine is configured to store data to be shared with the second signal processing device to the shared memory.

4. The signal processing device of claim 1, wherein the server virtual machine is configured to selectively encrypt the data to be shared with the second signal processing device based on impacting levels according to a data type and ASIL ratings, and to store the encrypted data to the shared memory.

5. The signal processing device of claim 4, wherein the server virtual machine is configured to:
in response to the impacting level being level 1, perform authentication without encrypting data;
in response to the impacting level being level 2, perform authentication and encrypt data without updating the security key; and
in response to the impacting level being level 3, perform authentication, encrypt data, and update the security key.

6. The signal processing device of claim 1, wherein the server virtual machine is configured to receive a second certificate from the second signal processing device, and a verifier in the hypervisor is configured to verify the second certificate,
wherein in response to the second certificate being verified, the server virtual machine is configured to transmit the security key to the second server virtual machine.

7. The signal processing device of claim 6, wherein in response to the second certificate being verified, the server virtual machine is configured to encrypt a symmetric key, and to transmit a security key, including the encrypted symmetric key, to the second server virtual machine.

8. The signal processing device of claim 7, wherein when encrypting the symmetric key, the server virtual machine is configured to encrypt the symmetric key based on a public key of the second signal processing device.

9. The signal processing device of claim 1, wherein the processor is configured to execute a security executor including a policy manager,
wherein the policy manager is configured to transmit a sharing policy or a topic based on the sharing policy to the server virtual machine, and
wherein the server virtual machine is configured to transmit the sharing policy or the topic based on the sharing policy to the second server virtual machine.

10. The signal processing device of claim 1, wherein the processor is configured to execute a security executor including a policy manager,
wherein the server virtual machine is configured to receive a policy table from the second server virtual machine, and the policy manager is configured to update the policy table,
wherein the server virtual machine is configured to transmit the updated policy table to the second server virtual machine.

11. The signal processing device of claim 1, wherein in response to connection with the second signal processing device, the server virtual machine is configured to determine whether a second server virtual machine is executed in the second signal processing device,
wherein in response to the second server virtual machine being executed, the server virtual machine is configured to set the signal processing device as a master signal processing device and the second signal processing device as a slave signal processing device based on the Automotive Safety Integrity Level (ASIL) ratings.

12. The signal processing device of claim 1, wherein in the case in that in the second signal processing device is connected, the second server virtual machine is not executed in the second signal processing device, and authentication or encryption is not supported, the server virtual machine is configured to set the signal processing device as a master signal processing device and the second signal processing device as a slave signal processing device.

13. A signal processing device configured to output an image to a vehicle display, the signal processing device comprising:
a shared memory; and
a processor configured to perform signal processing for at least one display,
wherein the processor is configured to execute a server virtual machine and at least one guest virtual machine on a hypervisor in the processor,
wherein in response to connection with a cartridge-based second signal processing device, the server virtual machine is configured to transmit a security key to a security interface in the second signal processing device.

14. The signal processing device of claim 13, wherein the server virtual machine is configured to transmit a certificate together when transmitting the security key to the security interface in the second signal processing device.

15. The signal processing device of claim 13, wherein the server virtual machine is configured to store data to be shared with the second signal processing device to the shared memory.

16. The signal processing device of claim 13, wherein the server virtual machine is configured to selectively encrypt the data to be shared with the second signal processing device based on impacting levels according to a data type and ASIL ratings, and to store the encrypted data to the shared memory.

17. The signal processing device of claim 13, wherein the server virtual machine is configured to receive a second certificate from the second signal processing device, and a verifier in the hypervisor is configured to verify the second certificate,
wherein in response to the second certificate being verified, the server virtual machine is configured to transmit the security key to a security interface in the second signal processing device.

18. A vehicle display apparatus comprising the signal processing device and the second signal processing device of any one of claims 1 to 17.
